# EUROPEAN PATENT SPECIFICATION

(11) **EP 4 409 103 B1**
(45) Date of publication and mention of the grant of the patent: **08.10.2025**
(21) Application number: 22834854.6
(22) Date of filing: 06.12.2022
(51) Int. Cl.: E06B 9/40, B01D 46/18

(54) **COMBINATION OF A MEMBRANE AND A FRAME**
ZUSAMMENSETZUNG AUS EINER MEMBRAN UND EINEM RAHMEN
COMBINAISON D'UNE MEMBRANE ET D'UN CADRE

(30) Priority: 07.12.2021 IE S20210206
(43) Date of publication of application: 07.08.2024
(73) Proprietor: McCormick, Michael, Newtowncloughogue Newry, Co. Down, Northern Ireland BT35 8LX (GB)
(72) Inventor: McCormick, Michael, Newtowncloughogue Newry, Co. Down, Northern Ireland BT35 8LX (GB)
(74) Representative: MacLachlan & Donaldson
(86) International application number: PCT/EP2022/084561
(87) International publication number: WO 2023/104779

(56) References cited:
- AU-B2- 423 650
- JP-A- 2007 298 206
- JP-Y1- S4 617 262
- US-A- 3 186 473
- US-A- 3 324 633

## Description

The present invention relates to a combination of a frame and a membrane for use in one or more of filtration, fire prevention, prevention of the passage of fluids such as water, smoke, vapour and the like, land reclamation, prevention of coastal erosion, building fabric protection, construction of internal and external walls and/or the roof of a dwelling or other building, manufacturing pre-fabricated buildings, manufacturing of sluice tanks, manufacturing of storage enclosures or racks, shelving, electrical and IT enclosures, and manufacturing of storage tanks and trailers for the haulage industry.

### Background to the Invention

Presently, the primary method of protection against tidal flooding, rainwater flooding or a river bursting its bank, is the positioning of sand bags, penstock plates, door barriers, etc., all of which are manually put into position and have many physical restrictions, e.g., as a consequence of their installation.

The secondary method in flood prevention is the constructing of dykes and walls to achieve perimeter protection from flood water and is often an engineering design of unsightly solutions and hugely expensive cost in materials, equipment, machinery and labour. Coastal erosion is constant and the costs are in many differing concepts, the conventional solutions are outdated and expensive costs in materials, equipment, machinery and labour. The reclamation of lands from the sea or the formation of new lands is a modern-day activity, the way in which this is engineered is through huge expense in the cost of materials, equipment, machinery and labour.

The marine industry is by its nature is full of hazards posed by water. Currently, if frequent inspections and preventative maintenance are not the norm, wear and tear can occur at high costs and allow the only form of protection to fail with devastating circumstances. The construction of a building should incorporate the core values of security, warmth, insulation, dry, privacy etc. Differing materials and methods of installation have been used in the past with little or no reduction in cost or carbon footprint and questionable quality as many parties are involved in the construction, and with technology offering much more the carbon footprint and cost of construction keep growing.

In recent years, uncontrollable bush or forest fires occurred in many parts of the world, with homes and sometimes whole neighbourhoods lost, succumbing to the flames and thermal combustion of the intense heat.

Modern buildings are designed with fire prevention being an integral part of the brief. Fire alarm systems, sprinkler systems, fire doors, fire dampers, fire extinguishers are examples from the list. The cost of equipment to purchase is exacerbated by the high cost of the installation as it delivered by numerous different manufacturers or suppliers with the installation from differing disciplines.

The filtration of the air we breathe, the water we drink, the fumes and the effluent we create is commonplace and because of the growing populations, the need and the costs also grow.

The practice of the separation of liquids and solids is common and waste water treatment largely still uses the method of settlement tanks. The carbon footprint and costs are both high.

The materials used in manufacturing sluice gates and the footprint they require for operating water level change through the methodology are both outdated.

Enclosed I.T. racks or cabinets for servers that store personal data can result in the generation of hazardous heat.

The haulage industry trailer design offers only stored passage of goods with little or no fire protection of the structure or the goods in transit or security or safety features.

Pre-fabricated buildings usually offer the enclosed unit, with little or no fire protection of the building fabric or pre-installed services within and a temporary life span.

The alternative design for the construction of tanks or pools has always proved difficult, as the challenge to retaining water was immense.

US 3,186,473 discloses means for controlling the amount and colour of the light entering a room through a large opening in a wall thereof. The light control unit comprises a rectangular frame having an upper closed casing 8 and a generally similar lower casing 9 which are connected at their ends by two vertical strips 21, 22, at their inside by two vertical strips 10 and at their outside by two similar vertical strips 11. A pair of parallel vertical members 16, 17 connect casings 8 and 9 and also the inner ends of members 10 and 11 together. Lower casing 9 also comprises an outer strip 12, a base strip 18, a pair of parallel cross strips 14, 15 and a door 23. Door 23 is hinged at its lower end by a hinge 24 and when closed its upper end fits against a recessed portion or face of strip 14.

JPS 46 17262 discloses a winding type filter, in which continuous wires are alternately hung on both ends of a filter medium guide frame alternately on both sides of a filter medium moving laterally across an air flow, and a guard for supporting a filter medium is formed. AU 423650 concerns continuous filters, particularly though not exclusively, for filtration of air in an air conditioning plant.

US 3,324,633 relates to an arrangement for controlling the advance of air filter material in automatic roll-type air filters.

It is a therefore an object of the present invention to provide an improved solution to the problem of any one of filtration, fire prevention, prevention of the passage of fluids such as water, smoke, vapour and the like, land reclamation, prevention of coastal erosion, building fabric protection, construction of internal and external walls and/or the roof of a dwelling or other building, manufacturing pre-fabricated buildings, manufacturing of sluice gates, manufacturing of storage enclosures or racks, shelving, electrical and IT enclosures, and trailers for the haulage industry, the construction of a swimming pool or tank or at least a suitable alternative thereto.

### Summary of the Invention

The present invention relates to a combination of a membrane and a frame.

Depending on the type of membrane or membranes used with the frame, the following uses may be provided by the frame according to the invention:
- raising the height of a river bank and preventing it from bursting;
- prevention of tidal flooding;
- protecting the building fabric of a property from water ingress;
- waterproof sealing for a doorway, gateway, vent, or window or other opening;
- waterproofing of structures in the process of land reclamation and coastal erosion;
- the construction of walls and/or roofs, giving a thermal protective, insulated, waterproof acoustic barrier;
- providing thermal insulation, thermal and fire protection and/or waterproofing/weathering to the exterior of a roof or building;
- purification, conditioning and renewed multi-use filtration of water;
- treatment, conditioning and renewed multi-use filtration of other liquids and effluent;
- conditioning and renewed multi-use and filtration of air and exhaust fumes;
- multi-deck, multi-use gravitational separation of water and sediment;
- separation of solids and particles;
- fire prevention and fire suppression in a room or enclosure;
- manufacturing of storage enclosures, shelving and IT enclosures to provide a fire suppressing frame and a secure and fire protective membrane with automatic activation of each feature;
- manufacturing of haulage trailers to provide a fire suppressing, direct ventilation frame and secure, fire protective curtain sides with automatic activation of each feature;
- in the construction of pre-fabricated buildings for the direct ventilation of rooms and enclosures; and
- manufacturing/construction of tanks, pre-fabricated tanks and swimming pools.

Accordingly, a first aspect of the present invention is a combination of a membrane and a frame according to claim 1.

In a preferred embodiment, the frame comprises
a rear outer section for structural integrity of the frame, wherein the rear outer section surrounds an inner frame opening;
a front inner section secured to the front of the rear outer section to form a first chamber for housing a membrane, a second chamber for retrieving the membrane and a third chamber between the first and second chambers and surrounding the inner frame opening, wherein the front inner section has a curved or angular front surface in the form of an integrally formed or separately attached skin and wherein the first and second chambers are at the opposite ends of the frame;
a first membrane guide located within the first chamber for use in deployment of a membrane;
a second membrane guide within the second chamber for use in retrieval of the membrane;
wherein a first aperture from which the membrane may be deployed from the first membrane guide and a second aperture through which the membrane may be received for retrieval onto the second membrane guide are located at opposing ends of the front inner section such that, when deployed, the membrane covers the inner frame opening and the majority of the front surface; and
wherein access panels are provided in the front inner section for access into one or more of the first, second and third chambers.

In a preferred embodiment, the back of the rear outer section is flat, particularly preferably wherein the rear outer section comprises a U-shape, square or rectangular flat back plate and a box section or side perimeter walls.

The inner frame opening is preferably in the centre of the frame and is either the area to be protected by a membrane or is the area of filtration, or both.

The rear outer section and front inner section are preferably integrally formed. Alternatively, the front inner section is separately formed and subsequently secured to the rear outer section.

The skin is preferably attached to the front inner section with the use of screws or cement.

The back of the skin is preferably provided with rubber gaskets to ensure the sealing upon the inner chamber walls against the back of the front surface and from each other.

The first and second chambers are preferably secured to the back plate or, alternatively, fabricated in place and sealed.

The first and second chambers are isolated from each other by the third chamber.

The inner walls of the third chamber make up the walls of the inner opening of the frame, thus preventing the passage of smoke or water through the internal structure of the frame when the frame is completely assembled.

In a preferred embodiment, one or more walls of the third chamber comprise one or more of a ledge protruding into the inner opening of the frame, a picture frame feature upon which a door can rest, a cooling coil for use in the de-humidification of air, UV lamps for the disinfectant of water and air, electromagnetic coils and electrodes to energise and manipulate ions in water for the propulsion of water and or the conditioning of water, damper blades for the control of air velocities, and a grid or mesh for support of the membrane and which covers the area being protected or for filtration.

In a preferred embodiment, the access panels for the first and second chambers are located in the skin, i.e., front surface, of the front inner section, particularly preferably at opposing ends of the skin.

In an alternative preferred embodiment, the access panels for the first and second chambers are located at the rear of the back of the frame.

In a preferred embodiment, the access panel for the third chamber is provided adjacent the inner frame opening.

In a preferred embodiment, the membrane guides each independently comprise one or more selected from among a guide roller, a guide bar and a guide rod.

A membrane deployment bar or rod is preferably mechanically linked to the first membrane guide with the use of a pulley or chain linked system.

In a preferred embodiment, the first membrane guide comprises a membrane deployment bar and a membrane deployment guide roller located within the first chamber for use in deployment of the membrane, preferably wherein the membrane deployment bar and membrane deployment guide roller are mechanically linked.

In a preferred embodiment, the second membrane guide comprises a membrane retrieval rotating rod and a membrane retrieval guide roller located within the second chamber for use in retrieval of the membrane preferably wherein the membrane retrieval rotating rod and membrane retrieval guide roller are mechanically linked.

Membrane deployment may be activated manually or automatically. In a preferred embodiment, an external actuator is placed on the outside of the rear outer section, particularly preferably adjacent the second chamber, i.e., adjacent the chamber for retrieval of the membrane, for activation of membrane deployment, e.g., wherein the actuator is attached to the membrane retrieval bar.

Alternatively, an internal actuator is placed within the second chamber and actuation is enabled with the use of a pulley or chain linked system connected to the second membrane guide, e.g., to a membrane retrieval bar.

In a preferred embodiment, the frame comprises an internal frame ventilation system, such as a fan.

In a preferred embodiment, one or more internal fans are located within the third chamber formed by the front inner section and rear outer section, preferably wherein the front inner section or the rear outer section, or both, comprise apertures such as perforations or slots for ventilation.

In the embodiment with apertures on both the front inner section or the rear outer section, a ventilation circuit from front to back is active when the internal frame fans are energized and generate a vacuum and draw the membrane onto the front surface, creating a seal between the membrane and the frame.

Alternatively, one or more fans are located at the rear outer section and the front inner section or the rear outer section, or both, comprise apertures such as perforations or slots for ventilation. In this embodiment, the ventilation circuit is active if the external extract ventilation system creates a sufficiently strong enough vacuum to create the seal between the membrane and frame or with the use of internal fans located in the third chamber.

In a further alternative embodiment, the front inner section or the rear outer section, or both, comprise apertures such as perforations or slots but no fans are present.

A vacuum on the membrane at the gaps between the frame and a door on which it is fixed will occur when oxygen is consumed by flames and the membrane is drawn into this gap to create a seal, so the slots can be independent from the fans in this use.

In a preferred embodiment, the internal structure of the frame, i.e., the first, second and third chambers are segregated from one another for complete internal, same side of frame isolation.

The first and second chambers are sealed through the fabrication process and isolated from the third chamber, i.e., from the internal area of the frame, thus preventing the passage of smoke or water through the internal structure of the frame when the frame is completely assembled.

In a preferred embodiment, each side of the frame comprises internal mechanical apparatus for housing and retaining the first membrane for deployment.

In a preferred embodiment, the frame further comprises mechanical piping installed within the third chamber and spray points for use with one or more of a fire suppression or sprinkler system, a filtration area backwash or blow off system, a chemical dosing for conditioning of water or effluent, or the aeration of effluents or decontamination or humidification of air. The spray points are preferably located on one or more of the front surface of the front inner section, the back of the frame at the rear of the third chamber and the walls of the third chamber collar wall. In a particularly preferred embodiment, the third chamber houses a primed tank of fire suppressant connected to the mechanical piping.

In a preferred embodiment, the first chamber comprises one or more bars or rods for housing and retaining a membrane in position.

In a particularly preferred embodiment, the first chamber comprises a first membrane guide roller or a first membrane guide bar, or both, and a roll or cartridge of membrane which is held in position with the use of the first membrane securing bar or rod, wherein the first membrane is pre-deployed via the first membrane guide roller and/or the first membrane guide bar and passed through the first membrane deployment aperture on the skin of the frame above the first chamber and across the surface of the frame, where it is passed through the first membrane retrieval aperture on the skin of the frame above the second chamber at the opposite side. In this embodiment, the second chamber comprises a first membrane retrieval guide roller and/or a first membrane retrieval guide bar and a first membrane retrieval rotating bar or rod, wherein the first membrane is attached to the first membrane retrieval rotating bar or rod via the first membrane guide roller and/or the first membrane guide bar and is actuated in a clockwise or anti-clockwise direction, from a point of actuation external to the second chamber or, with the use of pulley or chain linked system from an internal point of actuation in the second chamber to further retrieve the membrane across the surface of the frame.

The frame is preferably suitable for two membranes. In this embodiment, the first chamber comprises two membrane deployment guides, one above the other, and the second chamber comprises two membrane retrieval guides, one above the other.

However, this is not considered to be limiting and the frame according to the invention may be adapted for more than two membranes or comprise further chambers, or both.

In a preferred embodiment, the front inner section and rear outer section together form five chambers, the five chambers including two adjacent chambers for housing a membrane and two opposing chambers for retrieving the membrane and opposing the housing chambers, with a fifth chamber located between opposing housing chambers and retrieval chambers. In this embodiment, for a frame for two membranes, each housing chamber has one membrane deployment guide and each retrieval chamber has one membrane retrieval guide, whereas for a frame with four membranes, each housing chamber has two membrane deployment guides and each retrieval chamber has two membrane retrieval guide, and so on for further membranes.

Each membrane independently is preferably pre-deployed or readied to deploy with the use of membrane deployment/retrieval lines. In this embodiment, membrane deployment/retrieval lines are preferably passed through dedicated retrieval holes in the second chamber to the rear of the frame point of actuation via the first membrane guide roller for external rear of frame actuation.

Each membrane is preferably deployed singularly. Alternatively, the membranes may be deployed simultaneously.

In a preferred embodiment, the membrane deployment action is spring-return.

In a preferred embodiment, the skin comprises electrodes for electrification of the membrane.

A further aspect of the present invention is the membrane housed within the frame, wherein the membrane comprises a thin, pliable, flexible, robust sheet of material. In a preferred embodiment, the membrane is manually attached to the frame with laths. The membrane may be for a specific single purpose or multi-purpose.

In a preferred embodiment, the membrane comprises a porous or permeable surface. Alternatively, the membrane is impermeable. The membrane is preferably one or more of fire-retardant, thermally insulating and thermally protective. In a preferred embodiment, the membrane is a microbiological membrane. Alternatively, or additionally, the membrane preferably comprises one or more of metallic mesh, foil, lead, PVC, or polyester canvas. The membrane is deployed via the slot in the surface of the frame, over the surface of the frame and retrieved at the opposite side, either via holes in the frame or a slot on the surface to give a waterproof seal over the surface of the frame and across the inner frame opening. In a preferred embodiment, the membrane is multi-layered product for varying purposes.

In a preferred embodiment, the membrane further comprises retrieval lines embedded or embodied in each side thereof.

Preferably, the membrane further comprises one or more slots for one or more of doors, windows, chimney, exhaust openings or vents.

Preferably, the outer surface of the membrane further comprises a mesh or grill or supports across the inner frame opening, particularly preferably a load bearing mesh or a grill of structured design.

Preferably, the outer of the membrane is decorative.

The membrane is of any suitable shape for deployment through the apertures and to cover the front of the frame, e.g., square or rectangular.

The frame and membrane according to the invention are suitable for providing thermal protection to the fabric it is placed in front of and it can give waterproofing.

The frame and membrane according to the invention may thus also be used for the prevention of fire; the filtration of water, liquids and effluents; the filtration of air and fumes; the separation of solid particles; land reclamation; the prevention of coastal erosion; and building fabric protection.

The frame and membrane according to the invention may employed in the construction of internal and external walls of a dwelling or other building; the construction of a roof of a dwelling or other building; in pre-fabricated buildings; in storage enclosures or racks, shelving, electrical or IT enclosures; and for trailers for the haulage industry.

In a preferred embodiment, the frame may further comprise a cover for mechanical protection of the membrane.

The cover is not essential in the process of the membrane being deployed over the frame, however, if present, the cover provides mechanical protection to the edges of the membrane.

The cover further provides a structure for additional features such as a brush which could remove debris from the membrane surface as it passed through the deployment/retrieval motion. The cover preferably comprises a raised area, such as a rib, along the full width and same on the frame to squeeze a membrane between and remove water.

In a preferred embodiment there is a load bearing structure in the inner opening of the frame which is being protected by the membrane and for the membrane to lie upon, like a door or window or alternatively the area for filtration has a grill or grid to give support for the membrane.

In a preferred embodiment, the frame may house two membranes. These membranes may have the same or differing properties to each other, for example they may have the same or different micron value. The frame may for example house two membranes for a double seal, or for a dual function of a more robust outer layer across the inner frame opening, e.g., giving an impermeable barrier, thermal protection, and/or a protective acoustic barrier across the inner frame opening. Preferably, the frame houses two membranes of differing properties to give a secure, impermeable, thermal protective, insulated, acoustic structure across the surface of the frame and its inner opening.

In an embodiment which is not part of the invention, multiple units, i.e., two or more frames and associated membrane(s), are adjoined and installed in a side-by-side arrangement, particularly preferably upon foundations of calculated strength to withstand necessary weights of pressure from water or in front of a porous, load bearing structure or alternatively, the frame and membrane(s) may form an integral part of an impermeable wall when installed between load bearing pillars.

In an embodiment which is not part of the invention, two units, i.e., two frames and associated membrane(s), are adjoined and installed in a back-to-back arrangement, giving a thermal and air tight seal either side of the inner frame opening or the same protection either side of the inner frame opening or providing a double-sided filtration frame that may have a common filtered product draw-off point from the inner frame opening. In this embodiment there is preferably a void between each unit additional to their inner frame opening. Additionally, or alternatively, the back-to-back arrangement further comprises an extension collar.

In an embodiment which is not part of invention, four units, i.e., two frames and associated membrane(s), are adjoined and installed to form a six-sided structure (a cube or cuboid), wherein the four units are adjacently attached along their outer edge at a right angle to one another with a solid floor and a roof, preferably wherein each frame which makes up a vertical face of the structure has an accessible inner opening or one side may be of a solid face.

The frame preferably further comprises installed pipe work for the use as a fire suppression or sprinkler system, particularly preferably wherein two of the frame sides have the fire suppression or sprinkler system and two sides have internal segregation and vents on the inner frame surface, for the use as a method of direct ventilation within said frame. Preferably, the membrane housed within the frame provides walls and provides a secure, thermally protected air tight protective surface.

Preferably, the frame further comprises structured or designed shelving or slotted entries for the specific needs of housing IT servers and/or electrical equipment.

In a preferred embodiment, the frame is installed in a multi-deck design within an enclosure, wherein within each deck a membrane for the use of filtration is housed, each membrane being of a differing micron value, with the most permeable membrane at the upper deck. Preferably, a filtered product draw-off point is provided for each level of the deck.

In a preferred embodiment, the frame is installed in a side-by-side design within a channel and hinged at the top and bottom of the outer sides of the channel, wherein each membrane frame is a sluice gate and a deployed membrane is a controlled water weir.

In an embodiment which is not part of the invention, a structure of six sides (a cube or cuboid), the four sides adjacent and attached along the outer edge at a right angle to one another is formed from multiple frames according to the invention with a solid floor and roof.

Within each frame of the six-sided structure, pipe work is preferably installed for the use as a fire suppression system, particularly preferably with internal segregation and vents on the inner frame surface, for the use as a method of direct ventilation to within the structure. The membrane housed within the frame preferably provides walls including a secure, thermally protected air tight outer wall. In this embodiment, the frame preferably further comprises structured or designed shelving for the use as a secure fire protected electrical or IT servers' enclosure, for the use as secure fire protected storage, for the use as a secure fire protected enclosure.

In an embodiment which is not part of the invention, four units, i.e., two frames and associated membrane(s), are adjoined and installed to form a six-sided structure (a cube or cuboid), wherein the four units are adjacently attached along their outer edge at a right angle to one another with a solid floor and a roof, preferably wherein pipe work is installed for the use as a wash or blow off system, and wherein the membrane covers the surface of the frame and provides a multi-change filtration surface, with the inner area of the cube or cuboid being a common filtration zone.

Alternatively, pipe work is installed for the use as a fire suppression system, with internal segregation and vents on the inner frame surface, for the use as a method of direct ventilation to within the structure, wherein the membrane housed within the frame provides walls including a secure, thermally protected air tight outer wall, for the use as a secure and fire protected haulage trailer.

Alternatively, or additionally, cabling and piping are provided within the frame for electrical and mechanical services, wherein the membrane attached to the frame provides the buildings' fabric of a secure, thermally protected, insulated and acoustic outer wall, for the use as a pre-fabricated building or dwelling.

Alternatively, or additionally, each internal face of the wall has a membrane permanently attached to provide a water tight seal for the perimeter walls of a tank.

Preferably, a brush is affixed to the underside of the frame cover to provide a cleaning motion across the surface of the membrane as it is deployed.

### Brief Description of the drawings

Certain preferred embodiments of the present invention will now be described, by way of example only, with reference to the accompanying drawings in which:
Figure 1 shows a perspective view of a preferred frame according to the invention;
Figure 2 shows a perspective view of a preferred frame and membrane according to the invention;
Figure 3a shows a plan view of the preferred frame according to Figure 2;
Figures 3b and 3c show side and end views of the frame of Figure 3a, respectively;
Figure 4a shows a cross-sectional side views of the frame of Figures 2 and 3;
Figure 4b shows a cross-sectional side views of an alternative preferred frame according to the invention;
Figure 5 shows an internal perspective view of the frame of Figure 2;
Figures 6 shows a partial perspective view of the internal mechanics of the frame of Figure 2;
Figure 7 shows a partial perspective view of alternative internal mechanics for use with the frame according to the invention;
Figure 8 shows a perspective view of the frame of Figure 2 including optional extra features;
Figures 9a and 9b show side views of the frame of Figure 8;
Figure 10 shows a perspective view of an alternative, which is not part of the invention, with two frames of Figure 2 connected with an extension collar;
Figure 11 shows a partial isometric view of the frames of Figure 10;
Figure 12 shows a partial isometric view of the frames of Figure 10;
Figure 13 shows a perspective view of an alternative, which is not part of the invention, with a cuboid structure formed from frames of Figure 2:
Figure 14 shows a perspective view of an alternative frame, which is not part of the invention;
Figures 15a and 15b show a plan view and a side view of the frame of Figure 14;
Figures 15c and 15d show a plan view and a side view of another alternative frame, which is not part of the invention;
Figure 16 shows a perspective view of an alternative back-to-back design of two frames of Figure 2, which is not part of invention;
Figure 17 shows a cross section side view of the back-to-back design of Figure 16;
Figure 18 shows a plan view of the back-to-back frame design of Figure 16;
Figures 19a, 19b and 19c show front, side and plan views of a preferred membrane for use with a frame according to the invention;
Figures 20a and 20b show perspective views of an alternative preferred membrane for use with a frame according to the invention;
Figure 21 shows a perspective view of a preferred frame membrane cassette according to the invention;
Figure 22 shows a partial perspective view of the upper section of the frame of Figure 2;
Figure 23 shows an alternate partial perspective view of the frame of Figure 2;
Figure 24 shows a plan view of the frame of Figure 23;
Figure 25 shows a front view of the frame of Figure 23;
Figure 26 shows a partial perspective view of a preferred frame cover according to the invention;
Figure 27 shows a partial perspective reverse view of the frame cover of Figure 26;
Figure 28 shows an internal perspective view of the frame of Figure 14;
Figure 29 shows an isometric view of another alternative preferred frame according to the invention;
Figures 30 shows a partial perspective view of the internal mechanics of the frame of Figure 2;
Figure 31 shows a perspective view of the reverse of the frame skin of the frame of Figure 1;
Figure 32 shows a side view of the frame of Figure 1 in an enclosure;
Figure 33 shows a perspective view of two frames of Figure 1 side by side; and
Figure 34 shows an alternative cross section side view of the back-to-back design of Figure 16.

### Detailed Description

Various embodiments of the present invention will be described in detail with reference to the drawings, where like reference numerals represent like parts and assemblies throughout the several views.

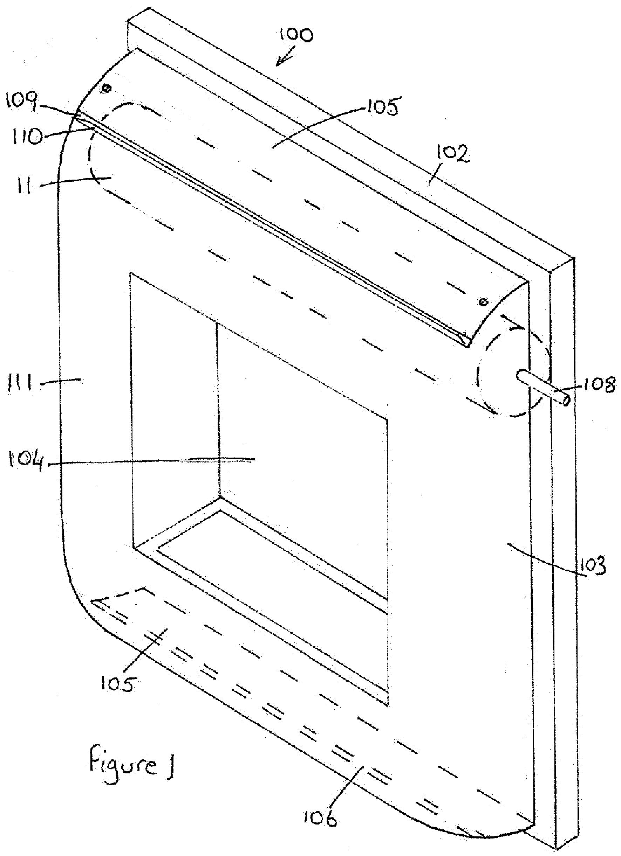

Referring to the drawings, Figure 1 shows a preferred membrane frame according to the invention, generally referred to by reference numeral 100 and having a top end 190 and bottom end 191.

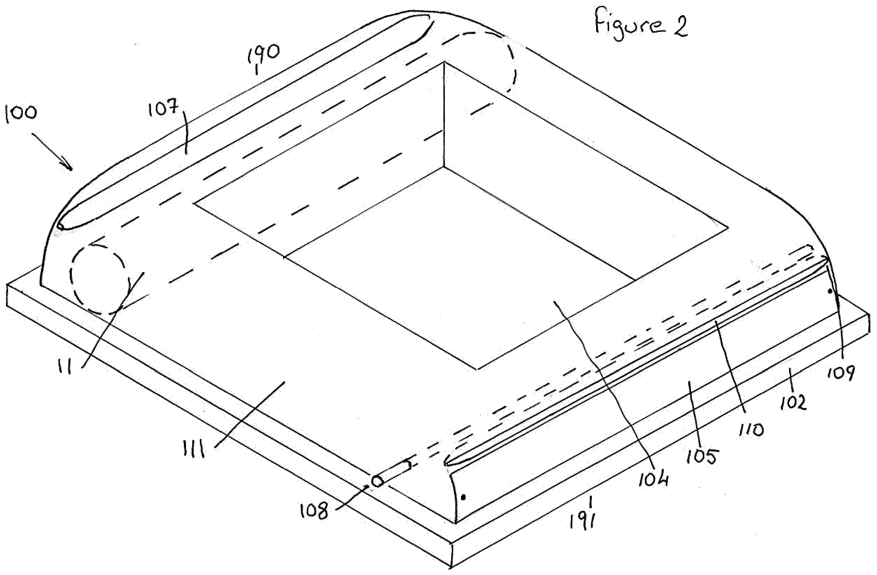

As shown in Figures 1 to 5, frame 100 has a rectangular rear outer section 102 for structural integrity of frame 100 and surrounding an inner frame opening 104, a front inner section 103 secured to the front of outer section 102 to form first and second chambers 132, 133 for housing and retrieving a first membrane 11, respectively, and third chamber 134 between chambers 132 and 133.

Front inner section 103 has a curved front surface 111 surrounding inner frame opening 104 and comprising access panels 105 for access into chambers 132 and 133. However, this is not considered to be limiting and front surface 111 of front inner section 103 may be angular instead of curved. Front surface 111 is preferably made of steel plate, aluminium sheet, hardened plastic, carbon fibre or fibre glass. However, this list is not exhaustive.

Frame 100 further comprises first membrane guide roller 107 located within chamber 132 at top end 190 of frame 100 for use in deployment of first membrane 11 and a second membrane guide roller 110 within chamber 133 at bottom end 191, i.e., at the opposite end of frame 100, for use in retrieval of membrane 11.

Membrane 11 is housed within chamber 132 in rolled up form or as a cassette and is deployed via membrane deployment aperture 106 with the use of membrane deployment guide roller 107 and retrieved through membrane retrieval aperture 109.

Chambers 132, 133 are sealed through the fabrication process and isolated from chamber 134, i.e., from the internal area of the frame, thus preventing the passage of smoke or water through the internal structure of the frame when the frame is completely assembled.

First membrane 11 is attached to membrane retrieval bar 124 and directly actuated at 108 such that membrane 11 may be rolled up upon membrane retrieval bar 124. When deployed, first membrane 11 passes over second membrane guide roller 110, covers inner frame opening 104 and the majority of front surface 111 and provides a seal.

In Figures 1 to 5, first aperture 106 from which first membrane 11 may be deployed from first membrane guide roller 107 is located on front surface 111 at top end 190 and second aperture 109 for retrieval of membrane 11 is located at bottom end 191 such that, when deployed, membrane 11 covers inner frame opening 104 and the majority of front surface 111. However, this is not considered to be limiting and deployment aperture 106 may instead be at bottom end 191 with retrieval aperture 109 at top end 190.

Front inner section 103 is preferably permanently attached to rear outer section 102 with front surface 111 forming an impermeable load bearing structure. For example, front surface 111 of front inner section 103 may be to welded to rear outer section 102 or attached using cemented joints.

In a preferred embodiment, not shown in the Figures, front surface 111 sits into a slotted groove (not shown) on rear outer section 102 where it is retained in position with the use of countersunk screws, cements or welded. A gasket feature may be provided in the groove to give an enhanced sealed fixing.

In another preferred embodiment, not shown in the Figures, the reverse surface of front surface 111 has a slotted groove where it is retained in position with the use of resin, glue or the like. A gasket feature is preferably provided in the groove to give an enhanced sealed fixing. Alternatively, a gasket feature is preferably used to provide the base for the walls of internal chambers 132, 133, 134 to sit upon.

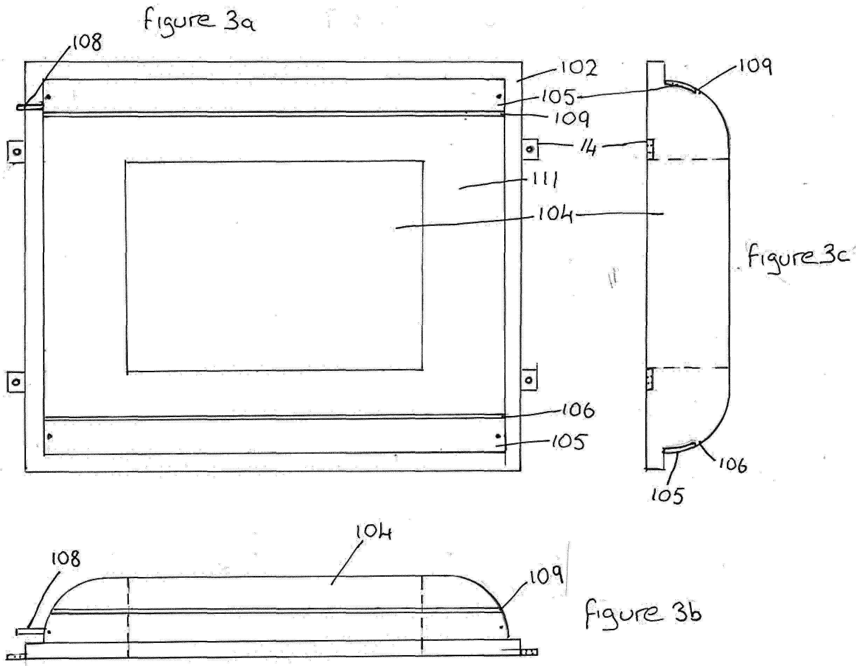

Figure 3b shows that aperture 109 for the retrieval of membrane 11 is wider than inner frame opening 104 and when actuated at 108, deployed membrane 11 covers the whole of inner opening 104 and creates a seal upon front surface 111.

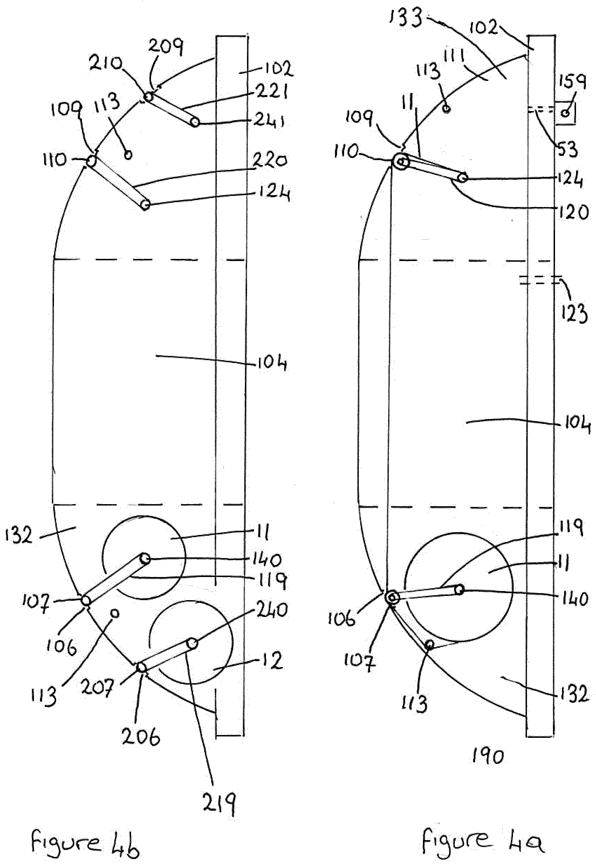

Figure 4a shows a roll of membrane 11 housed within the internal frame structure of frame 100. Membrane 11 is deployed via aperture 106, over deployment guide roller 107 and retrieved via aperture 109 over retrieval guide roller 110 where it is attached to membrane retrieval bar 124. To promote a seamless deployment/retrieval actuation, pulley wheel or cog mechanical linkage 119 is preferably located between membrane retention bar 140 and deployment guide roller 107. A further pulley wheel or cog mechanical linkage 120 is located between membrane retrieval bar 124 and membrane retrieval guide roller 110.

Membrane 11 is fed around membrane guide bars 113 to achieve the most suitable angle for deployment. The retrieval of membrane 11 preferably occurs via actuator 108, external to frame 100, or alternatively with the use of retrieval point 159 located at the back of frame 100, where retrieval lines 47 of the membrane 11 are actuated through aperture 53. Each of actuator 108 and retrieval point 159 may be manually or automatically activated. Membrane deployment action is preferably a mechanical spring return action.

In the preferred embodiment shown in Figure 4a, rear outer section 102 is provided with drainage pipe 123 adjacent inner frame opening 104. Drainage pipe 123 is for the draining of product which has passed through the area of filtration when there is no passage through the back of frame 100 via inner opening 104.

Figure 4b shows an internal side view of a preferred alternative membrane frame 200 according to the invention, generally referred to by reference numeral 200 and being for two membranes. Frame 200 differs from frame 100 in that it comprises a third aperture 206 for deployment of a second membrane 12 and fourth aperture 209 for retrieval of membrane 12.

In frame 200, two rolls of membrane 11, 12 are housed within chamber 132. Membrane 11 is deployed and retrieved as previously described above and membrane 12 is deployed via aperture 206 using deployment guide roller 207. As shown in Figure 4b, there is a pulley wheel or cog mechanical linkage 219 located between membrane retention bar 240 and deployment guide roller 207. The retrieval of membrane 12 occurs via aperture 209 with the use of a direct actuation point (not shown). Membrane 12 is fed over membrane guide roller 210 and is attached to membrane retrieval bar 241 onto which it is wound. Due to the angle for the points of deployment and retrieval of membrane 12, apertures 206, 209 are further to the back of frame 200 and may be wider than apertures 106, 109 for the deployment of membrane 11 and therefore the surface area of frame 200 covered by membrane 12 is greater than that covered by membrane 11.

In an alternative embodiment, not shown in the Figures, apertures 106 and 109 are wider than apertures 206 and 209 such that the surface area of frame 200 covered by membrane 11 is greater than that covered by membrane 12 regardless of the aperture position on the frame.

Figures 4a, 4b and 4c show fixing points 14 which may be used to secure the Frame in position.

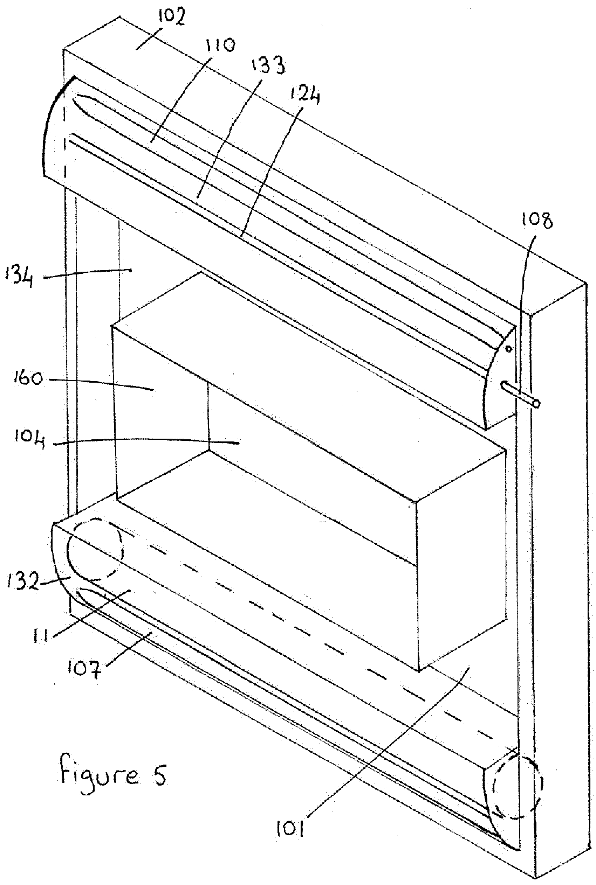

Figure 5 shows frame 100 with front surface 111 removed. As can be seen in this Figure, membrane 11 is housed within chamber 132. Chamber 132 is sealed such that air and water may not pass. Membrane 11 is preferably pre-loaded and readied for deployment, with membrane retrieval lines 47 or membrane 11 itself, fed around the back of membrane deployment guide roller 107 and through aperture 106 (not visible in Figure 5). Membrane retrieval lines 47 or membrane 11 are then fed through membrane retrieval aperture 109 (not visible in Figure 5) and around the back of membrane retrieval guide roller 110 and attached to membrane retrieval bar 124 which in this case is attached to actuator 108. Actuator 108 is external to frame 100 in the embodiment shown in Figure 5. Chamber 133 for the housing of the retrieved membrane is also a sealed section through which air or water shall not pass through.

As shown in Figure 5, inner frame opening 104 is surrounded by four-sided collar wall 160 of chamber 134, through which direct ventilation can occur. Fire suppression services or aeration or air and water conditioning services (not shown) may be installed in chamber 134.

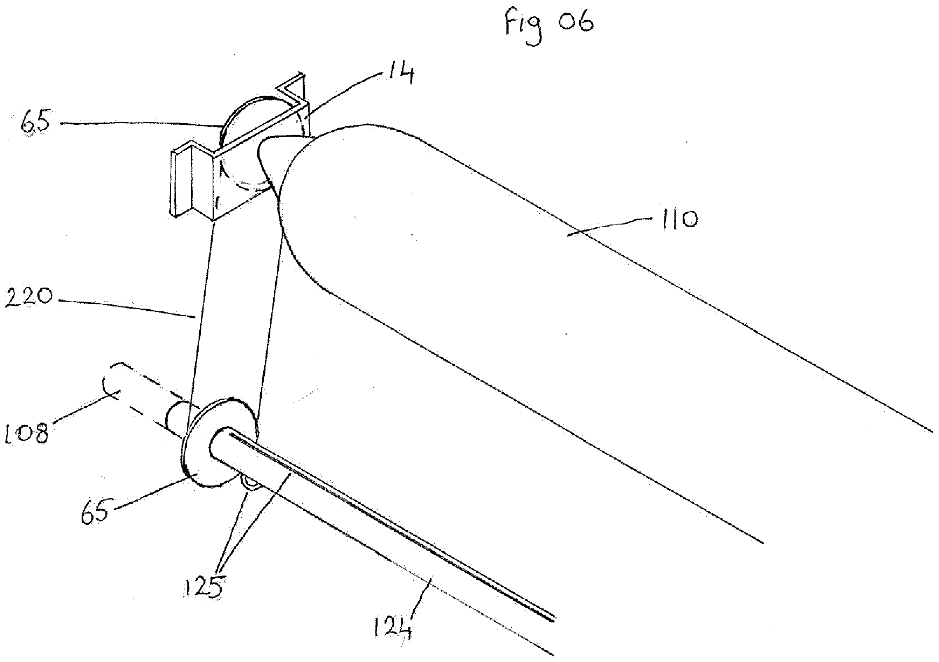

Figure 6 shows membrane retrieval guide roller 110 and membrane retrieval bar 124 attached to actuator 108, wherein actuator 108 is external to the wall of chamber 133. Mechanical linkage 220 uses pulley wheels 65 to connect membrane retrieval guide roller 110 and membrane retrieval bar 124 to promote ease of membrane retrieval. Membrane 11 is preferably passed through membrane retrieval aperture 109 (not shown in Figure 6) over membrane retrieval guide roller 110 and attached to bar 124 at securing points 125 or via membrane retrieval lines 47. Mounting brackets 14 are preferably used for installation.

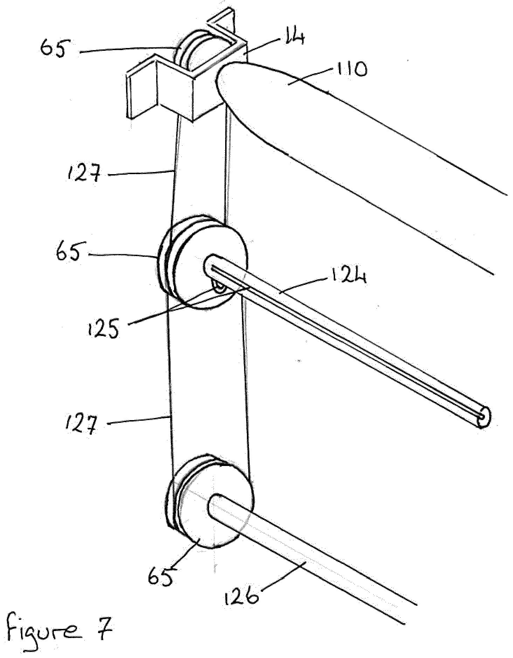

Figure 7 shows an alternative embodiment to that shown in Figure 6, in which an indirect actuation can occur within chamber 133. In this embodiment, the point of actuation is bar 126 and with the use of pulley wheels 65 and mechanical linkage 127, the actuation of membrane retrieval bar 124 occurs. There is a further mechanical linkage between the membrane guide roller 110 and the membrane retrieval bar 124 to promote a seamless deployment/retrieval actuation. Membrane 11 is retrieved through the aperture 109 (not shown in Figure 7) and over membrane retrieval guide roller 110 when bar 126 is rotated in a clockwise direction.

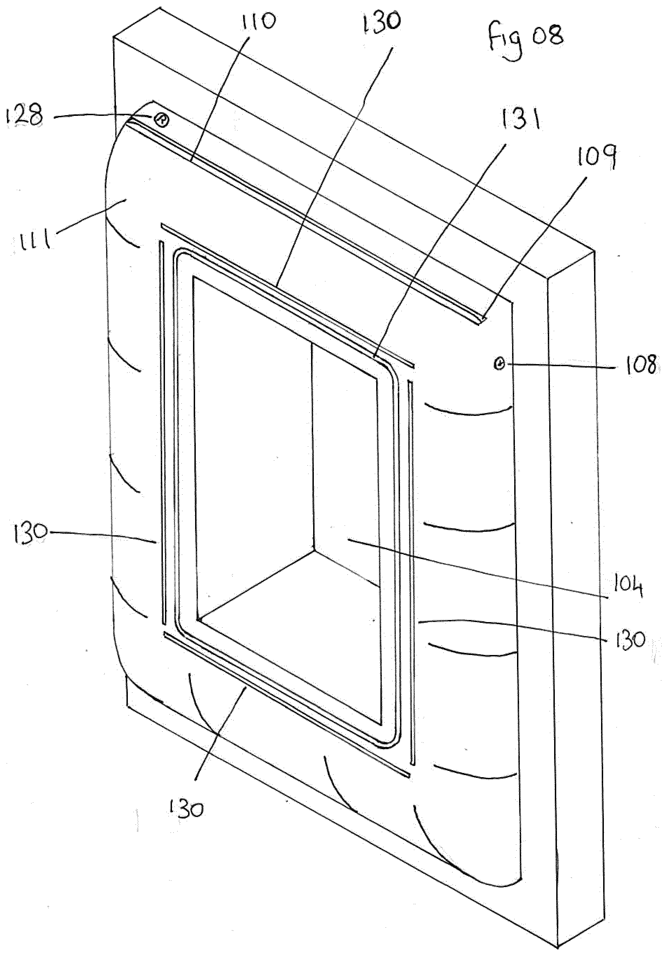

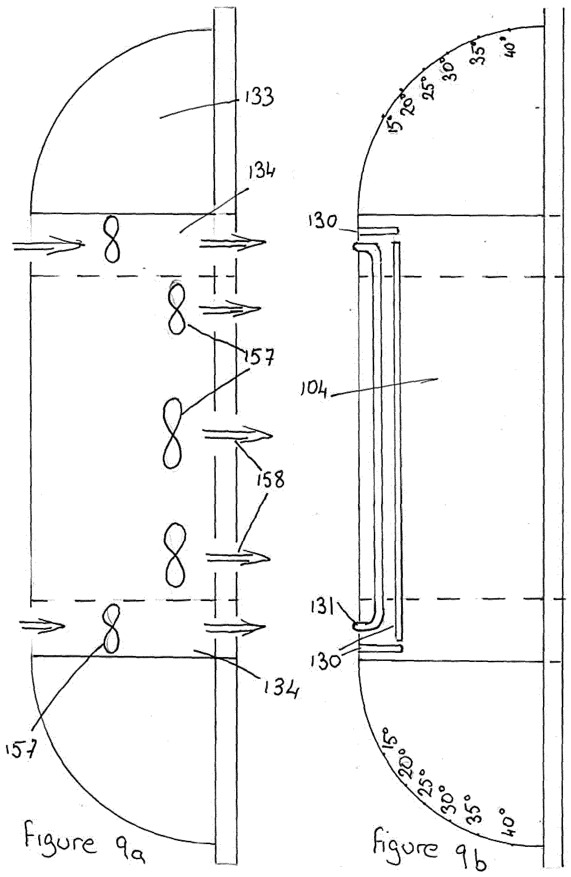

Figure 8 shows optional membrane release button 128 for use in releasing membrane 11 manually. Optional ventilation slots 130 in front surface 111 and optional sealing ridge 131 on surface 111 are also shown in this Figure and in Figures 9a and 9b. These are preferably provided to assist in providing an air tight seal of membrane 11 upon surface 111.

Figures 9a and 9b show ventilation fans 157 installed within chamber 134 to provide the sealing of membrane 11 upon frame 100 by creating a vacuum with the use of ventilation slots 130 on surface 111 and rear ventilation slots 158 on the back of inner section 103, or on outer section 102, or both. A minimum angle of approx. 22.5 degrees is preferably used to ensure membrane 11 covers the required surface area in this embodiment.

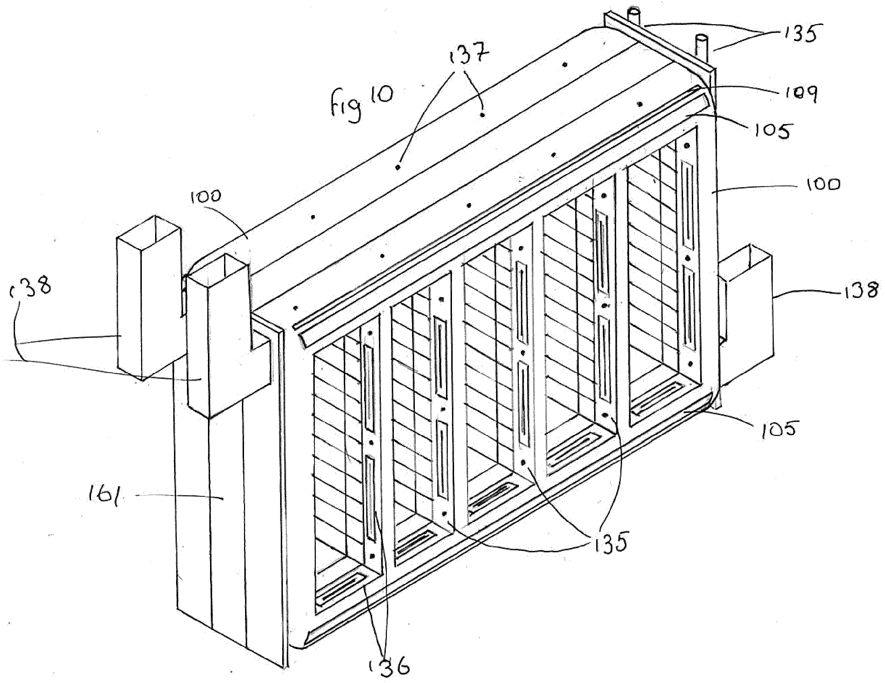

Figure 10 shows two frames 100 in a back-to-back fashion with extension collar 161 between them. The internal structure of the frame may be used to deliver direct ventilation via vents 136, with the use of ventilation ducting 138. A fire suppression system with fire suppression pipes 135 terminated on inner opening collar wall 160 is installed in chamber 134. In this embodiment, inner opening 104 of the frame has a structure installed within to create the duct ways for the direct ventilation and a route for the fire suppression piping. Air sampling points 137 are optionally present. Extension collar 161 may be used for glanding cables or a point of termination for cabling.

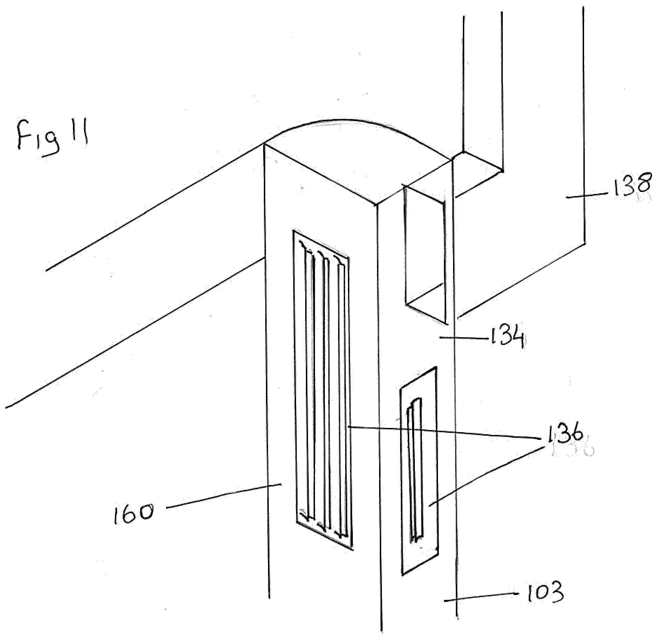

Figure 11 shows a preferred embodiment in which a supply or extract duct of ventilation ducting 138 is connected to chamber 134. With the use of air directional vents 136 on inner collar wall 160, highly efficient ventilation may be provided. Alternatively, or additionally, air directional vents 136 are used on the rear of inner section 103.

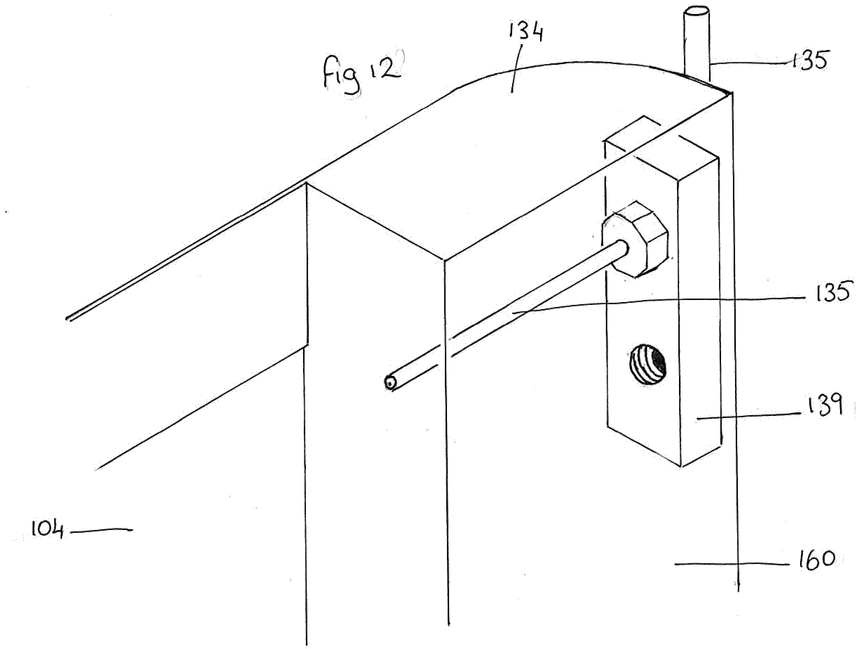

Figure 12 shows a preferred embodiment in which fire suppression piping is terminated to fire suppression manifold 139 installed within chamber 134, with fire suppression pipe 135 installed and terminated at inner collar wall 160. Alternatively, or additionally, fire suppression points (not shown) are on the rear of inner section 103.

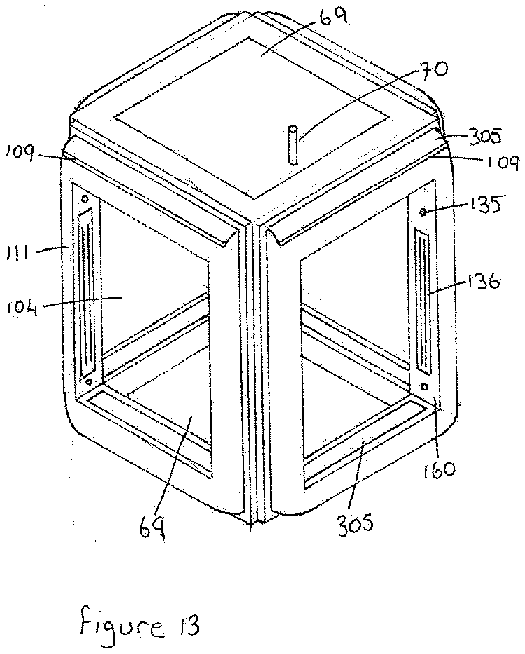

Figure 13 shows four frames 100 connected with top and bottom plates 69 to form a cuboid shaped structure, with inner opening collar wall 160 provided with air vents 136 and fire suppression pipes 135. Access panels 305 are provided for access to internal chambers 132, 133, 134 and the services 135, 136 as well as to membrane 11 and the deployment and retrieval components. Solid top and bottom plates 69 may be used to gland cabling. In the embodiment shown in Figure 13, optional air vent 70 is provided in top plate 69 to aid filtration.

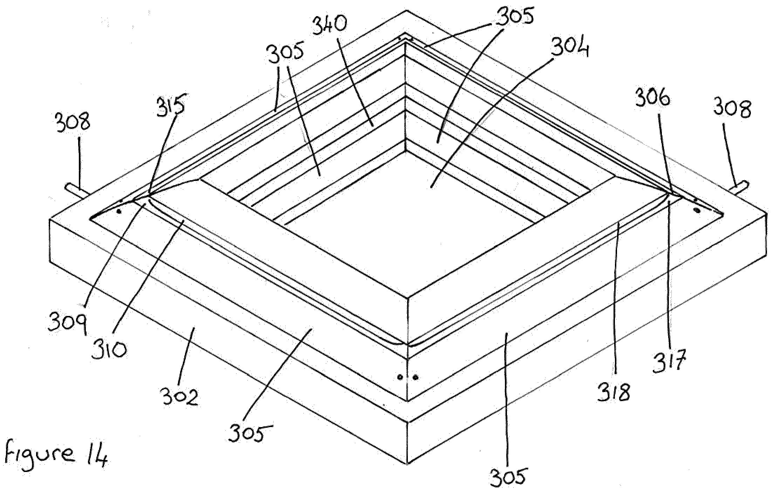

Figure 14 shows another preferred membrane frame according to the invention, generally referred to by reference numeral 300.

Frame 300 is for two membranes, is square, and has two orthogonal slots 306, 315 for membrane deployment and two opposite orthogonal slots 309, 317 for retrieval such that the two membranes 11, 12 are orthogonal to each other once deployed. Membrane 11 is deployed via aperture 306 around a membrane guide roller (not shown) and retrieved via aperture 309 around another membrane retrieval guide roller (not shown) where it is attached to its point of actuation 308. Membrane 12 is deployed via aperture 315 around a third membrane guide roller (not shown) and retrieved via aperture 317 around a fourth membrane guide roller (not shown) where it is attached internally to its' point of actuation 308.

Loading bearing shelf 340 is attached to inner opening collar wall 360 and is provided with access panels 305 to give access to inner chamber 334. Loading bearing shelf 340 provides structure for items to rest upon or be installed on to give support for membrane 11, 12.

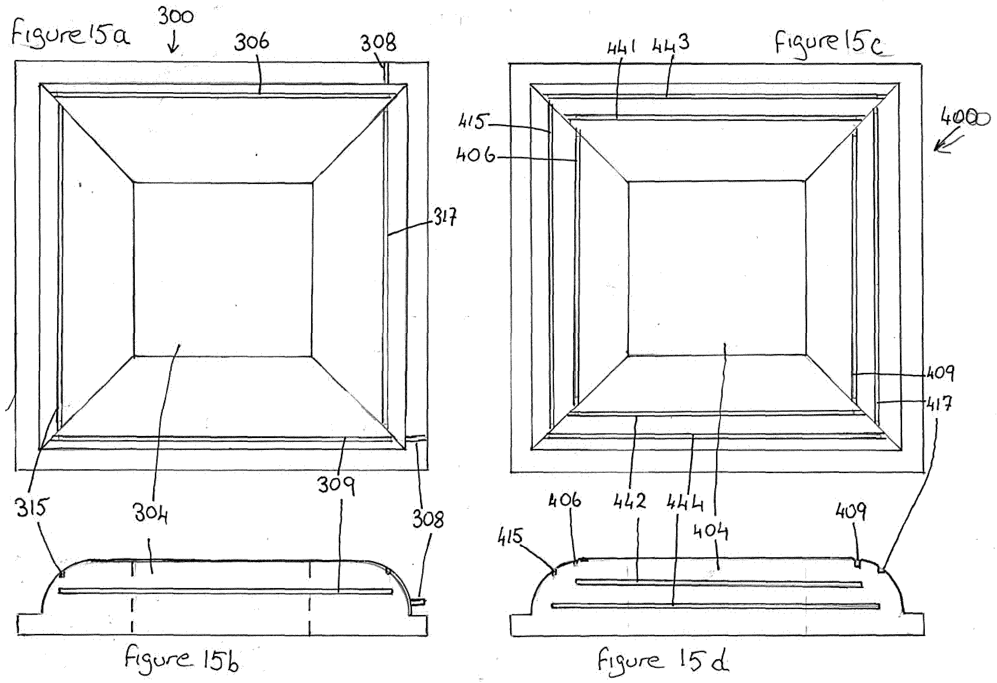

Figures 15a and 15b show the front and a side of frame 300, respectively. When membrane 11 is deployed from aperture 306 and retrieved in aperture 309, it covers inner frame opening 104. Membranes 11 and 12 are retrieved using actuation points 308. When membrane 12 is deployed via aperture 315 and retrieved via aperture 317 it covers inner frame opening 104 and forms a seal over the covered surface area of the frame.

Figures 15c and 15d show the front and a side of another preferred square membrane frame according to the invention, respectively, generally referred to by reference numeral 400. Frame 400 is for four membranes, has four slots 406, 415, 441, 443 for the deployment of four membranes where they may be retrieved dedicated aperture 409, 417, 442, 444 opposite. Membrane 11 is deployed via aperture 406 and retrieved via aperture 409. Membrane 12 is deployed via aperture 415 and retrieved via aperture 417. Membrane 12 is deployed via aperture 415 and retrieved via aperture 417. A third membrane is deployed via aperture 441 and retrieved via aperture 442. A fourth membrane is deployed via aperture 443 and retrieved via aperture 444, with each deployed membrane covering the inner frame opening 404 and providing a sealing upon surface 411. Membranes are actuated at points 408.

Whilst frames 300 and 400 are shown as square, this is not considered to be limiting and they could be another shape, for example rectangular.

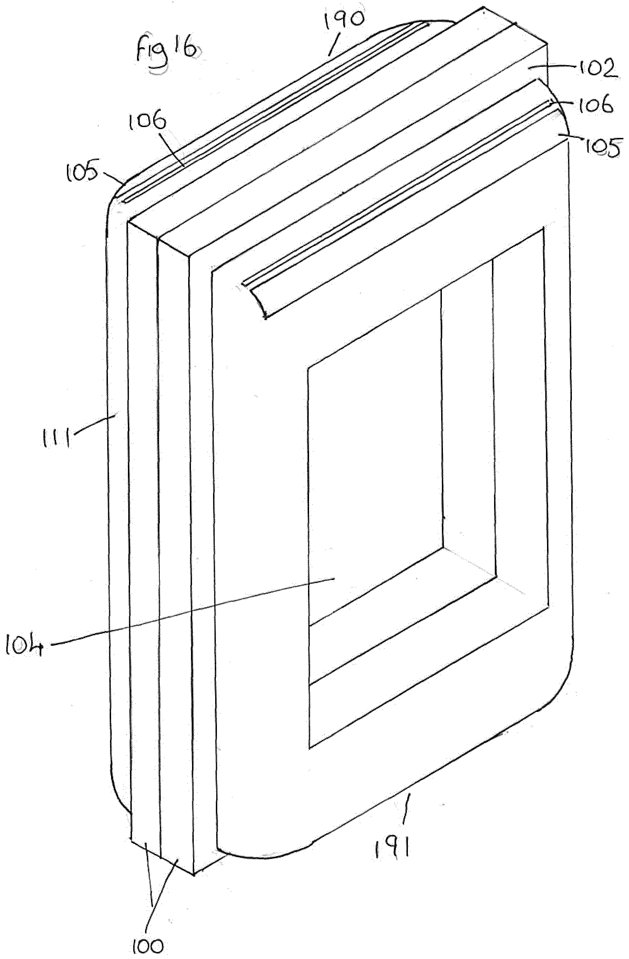

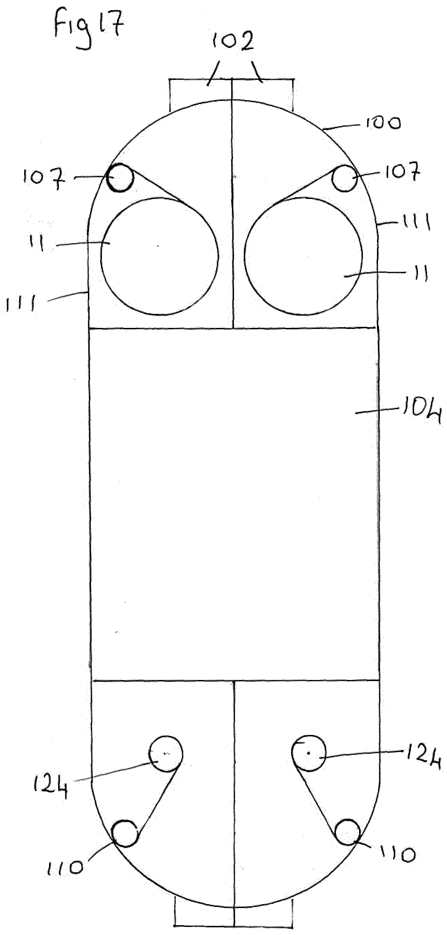

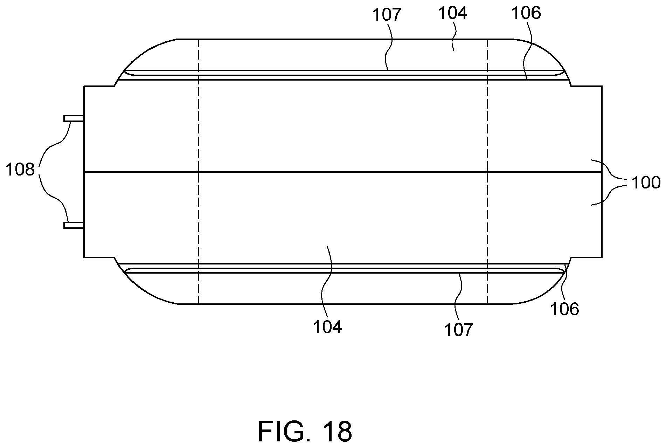

Figure 16 shows two frames 100 according to the invention back-to-back. Figure 17 shows an internal side view of the back-to-back frames of Figure 16. Figure 18 shows a plan view of the back-to-back frames of Figure 16.

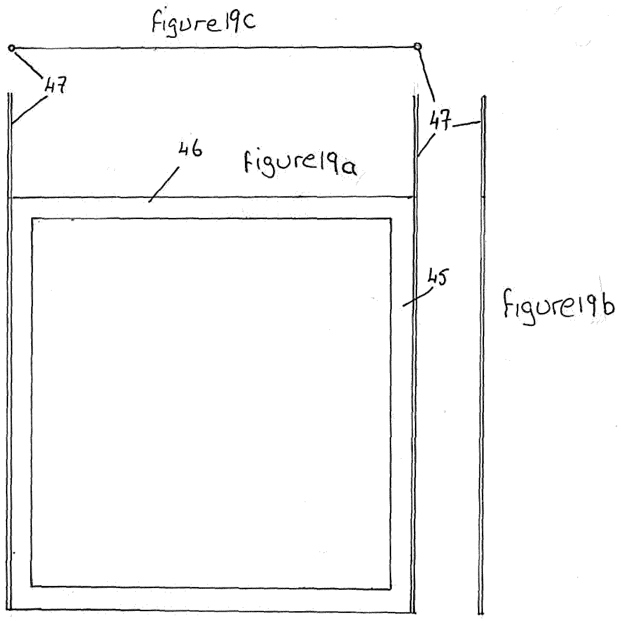

Figures 19a to 19c show a number of views of a preferred membrane 11 according to the invention.

Membrane 11 shown in Figures 19a to 19c is square in shape and comprises an impermeable surround 45 which acts an area of primary sealing upon the front surface on which it is deployed. Remaining surface area 46 of membrane 11 is preferably also impermeable and of the same composition as surround 45. Alternatively, surface area 46 is made of an alternative material or fabric suitable to its needs. The thickness of the membrane may also vary based upon what it is to be utilised for. The overall size of the membrane is governed by the inner area of the membrane housing section if it is deployed from this location. Retrieval lines 47 are embedded in the membrane.

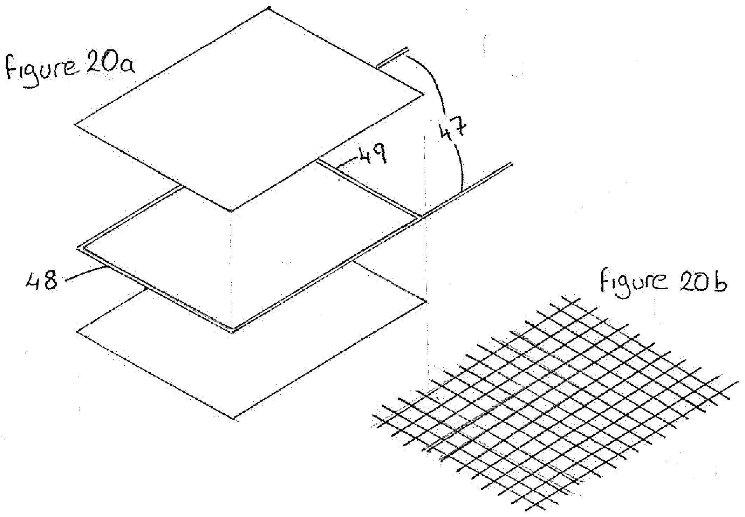

In Figures 20a and 20b membrane 11 is illustrated as being square in shape. However, this is not considered to be limiting and the membrane could be another shape, for example rectangular.

It can be seen from Figure 20a that membrane 11 is multi-layered. Each layer may offer differing protection. Retention rib 48 and rigidity 49 are embedded within membrane 11.

Retention rib 48 is a strengthened or raised area on membrane 11 which assists in affixing membrane 11 to membrane retention bar 124. Rigidity 49 is also a strengthened rib that assists in retaining a deployed membrane in position.

Figure 20b shows a preferred layer of the membrane in the form of a grid for structural integrity. The grid is preferably thin, pliable, flexible and robust.

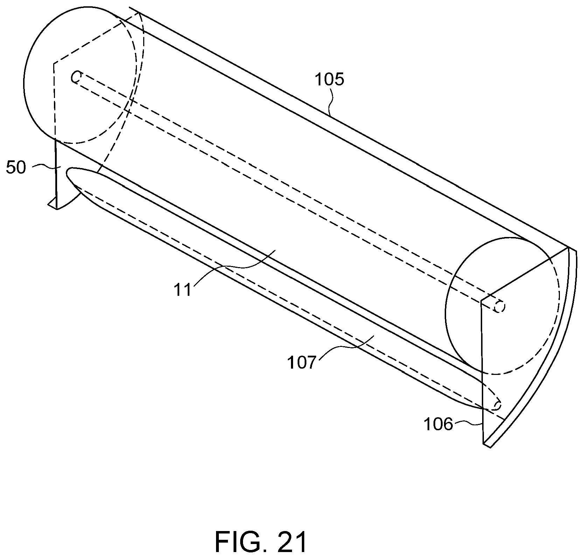

Figure 21 shows a roll of membrane 11 located at the back of the access panel 105. The roll of membrane 11 and the membrane guide roller 107 are preferably affixed to the rear of access panel 105 using side mounting plates 50 and in doing so providing a membrane cassette design. The membrane cassette preferably has membrane guide bars (not shown) for ease of deployment. Alternatively, the cassette is independent of the cover and is enclosed installed in chamber 134 behind access panel 105.

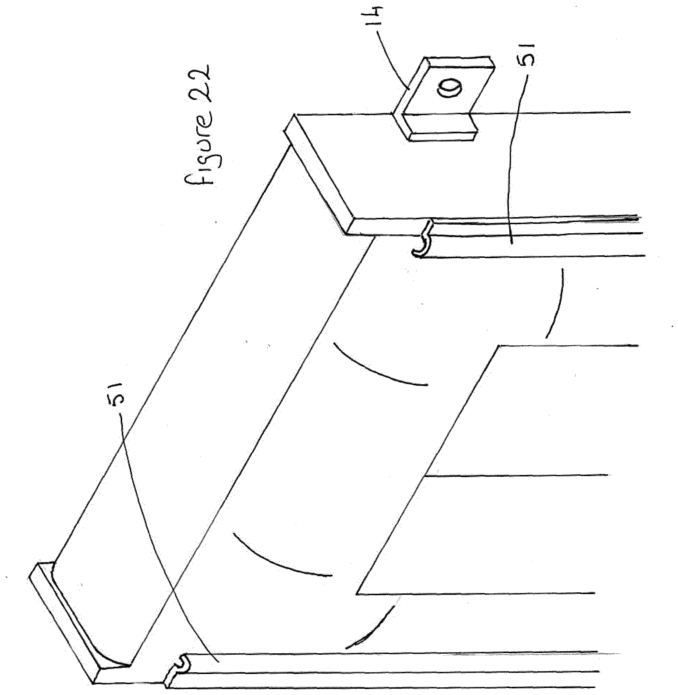

Figure 22 shows a partial perspective view of the upper section of frame 100. Membrane 11 is preferably held in place over front surface 111 of frame 100 using retention lathes 51. Membrane 11 is then preferably manually attached at the rear of frame 100. Frame 100 is preferably fixed into position using mounting brackets 14.

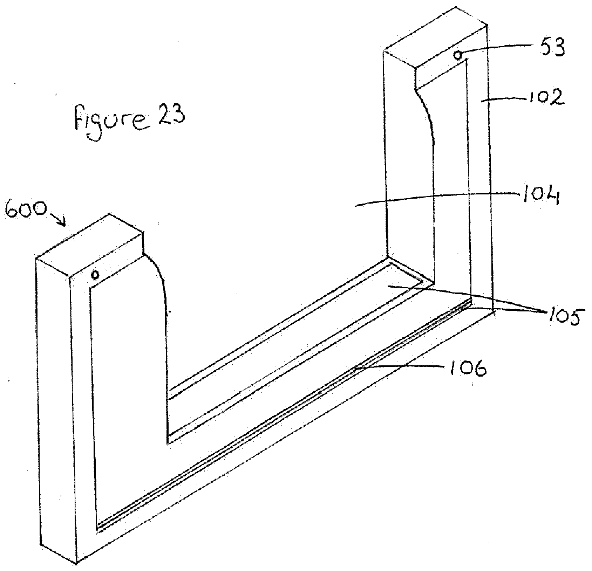

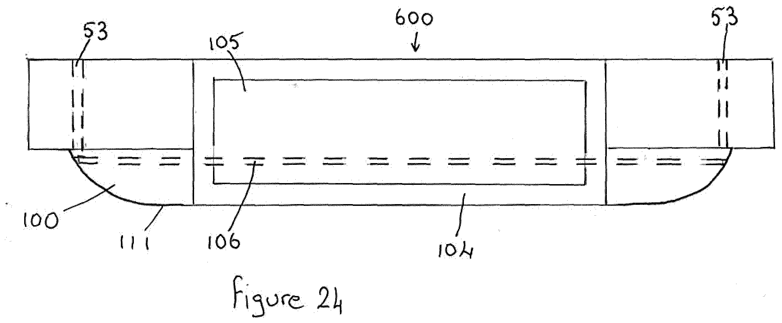

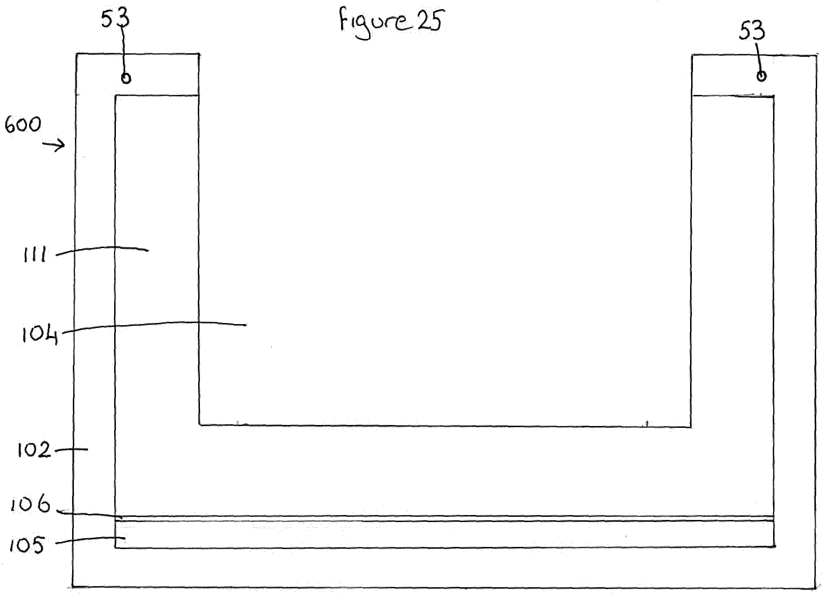

Figures 23, 24 and 25 show U-shaped frame 600. Once membrane 11 is housed behind access panel 105, it may be manually deployed, with membrane retrieval lines 47 being fed through the holes 53 in the frame and secured in position at the back of the frame.

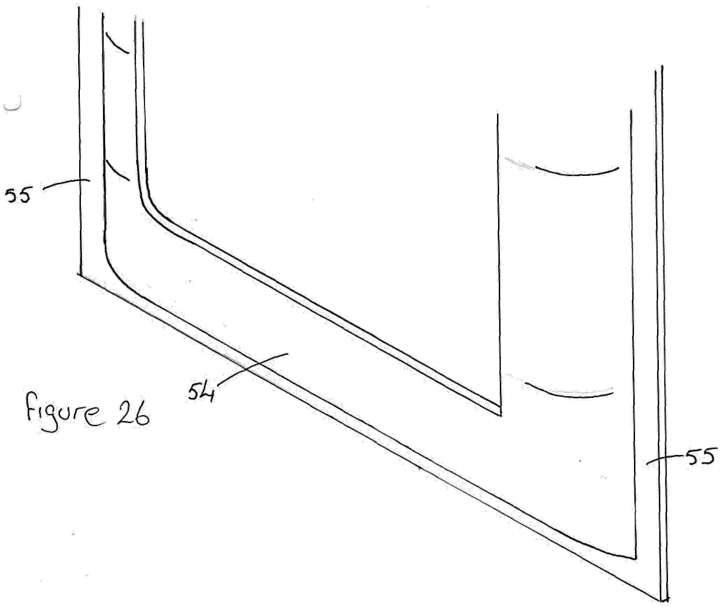

Figures 26 shows an optional cover 54 for the frame according to the invention. Cover 54 has wings 55 on either side to fix cover 54 to rear outer section 102.

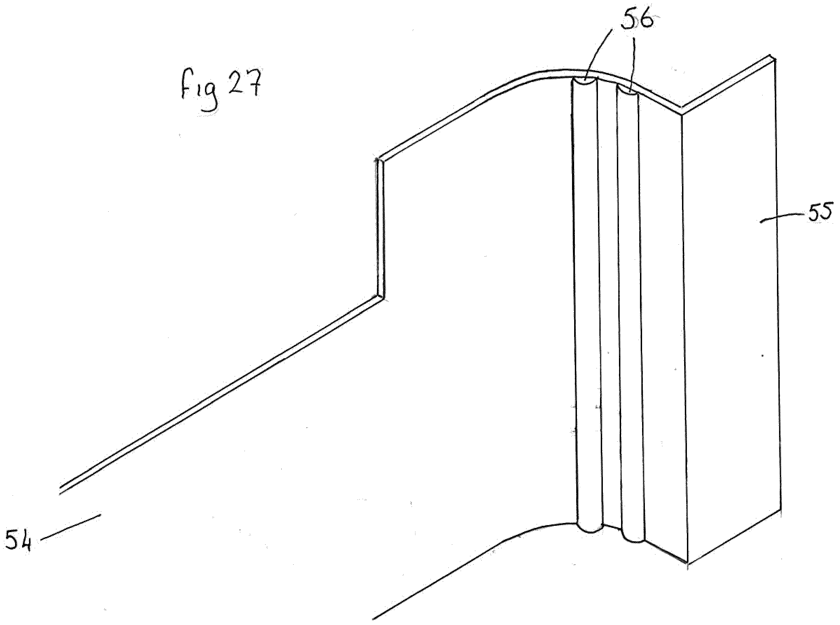

Figure 27 shows the reverse side of cover 54 with rib feature 56 for guiding and retaining the membrane in its desired position.

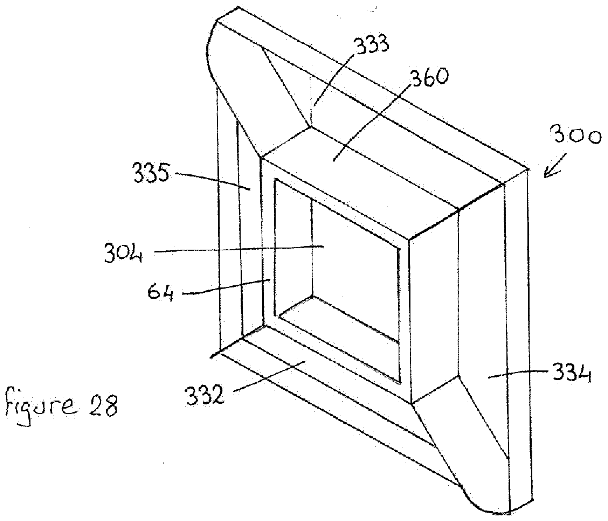

Figure 28 shows a front view of frame 300 with front surface 111 removed. In this embodiment, inner opening 304 is surrounded by four-sided collar wall 360, with four internal chambers 332, 333, 334 and 335. Inner opening 304 has a picture frame insert 64 to provide a load bearing structure for an inwardly opening door (not shown) to rest upon.

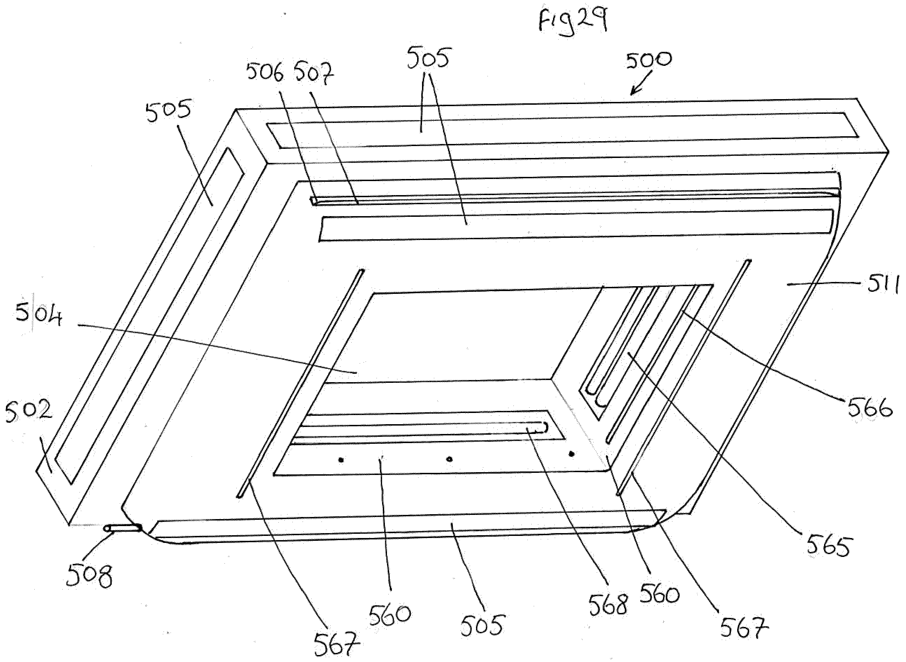

Figure 29 shows another preferred membrane frame according to the invention, generally referred to by reference numeral 500. Frame 500 comprises access panels 505 on front surface 511 of front inner section 503 or on rear outer section 502. Membrane 11 is housed within frame 500 and deployed through aperture 506 via membrane deployment guide roller 507. Membrane 11 is retrieved at its opposite side and is actuated by rotating bar 508. Inner opening collar wall 560 is provided with fitted UV lamps 565 for water disinfectant treatment, with electrodes 566 having surface 567 and insulated from the frame, and with magnetic coils 568 which, when installed in a channel, submerged in water and energized, generate a propulsion of the water in the channel through the inner frame opening 504.

Alternatively, membrane 11 is a metallic or metallic mesh or foil which may receive an electrical current via electrodes 567 located on front surface 511.

Electrodes 566 located on front surface 511 or collar wall 560 are preferably insulated from the frame or the frame may be of an insulating property. Membrane 11 is deployed across the surface area for filtration.

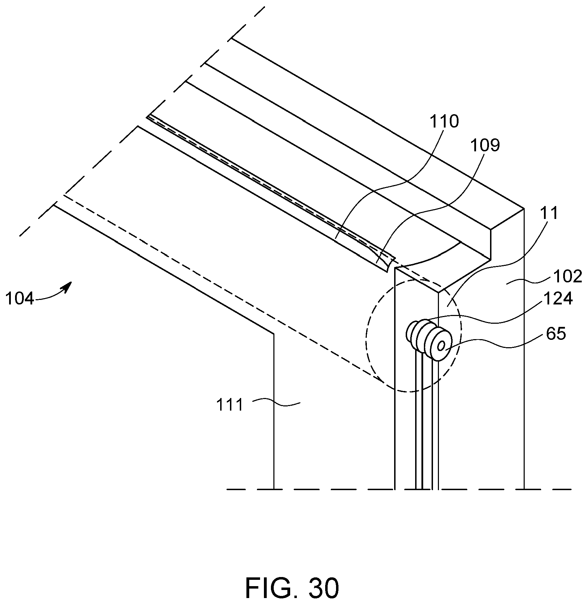

Figure 30 shows membrane 11 retrieved via membrane retrieval aperture 109. Retrieval bar 124 is extended into outer frame 102. A mechanical linkage between the deployment and retrieval chambers can be made via the inner chamber provided by the structure 102 using a pulley wheel 65 system to promote ease of membrane retrieval.

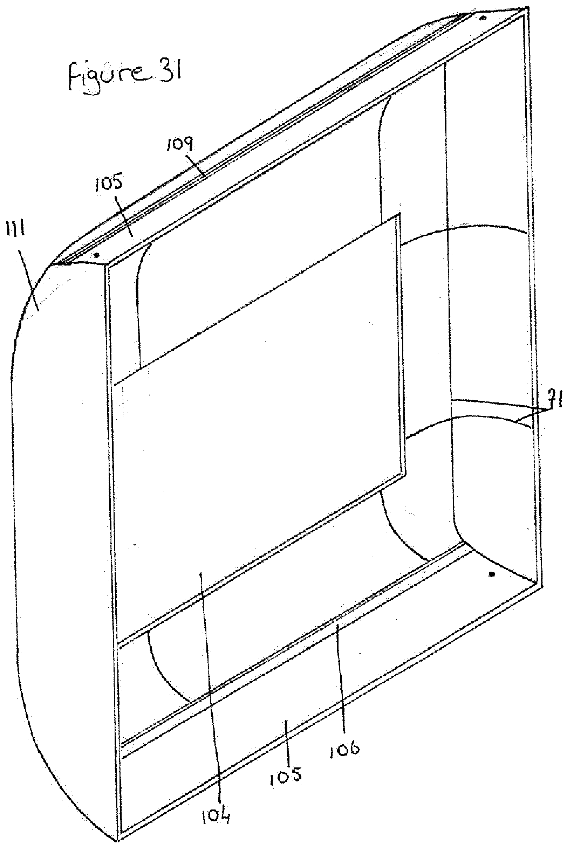

Figure 31 shows the reverse side, i.e., interior, of skin 111. In the embodiment shown, an optional grid 71 is present for structural integrity of skin 111.

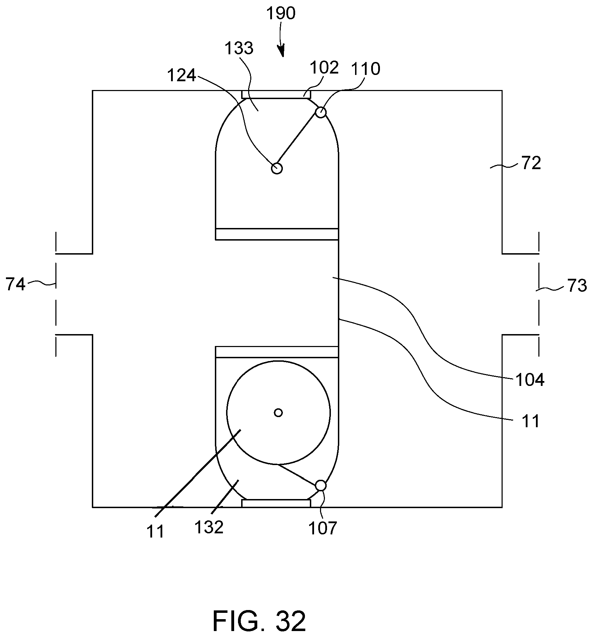

Figure 32 shows frame 100 in the middle of an enclosure 72. In use, product for filtration enters the enclosure at opening 73 and passes through membrane 11 through the area of filtration, inner frame opening 104. The product is extracted through the enclosure point of egress 74. When the filter surface gets dirty, a new piece of membrane 11 is actuated around membrane retrieval bar 124 via membrane retrieval guide 110 in chamber 133 at end 191 from the roll or cassette of membrane 11 housed in chamber 132 via membrane deployment guide 107 at end 190 and covers inner opening 104 to give renewed filtration.

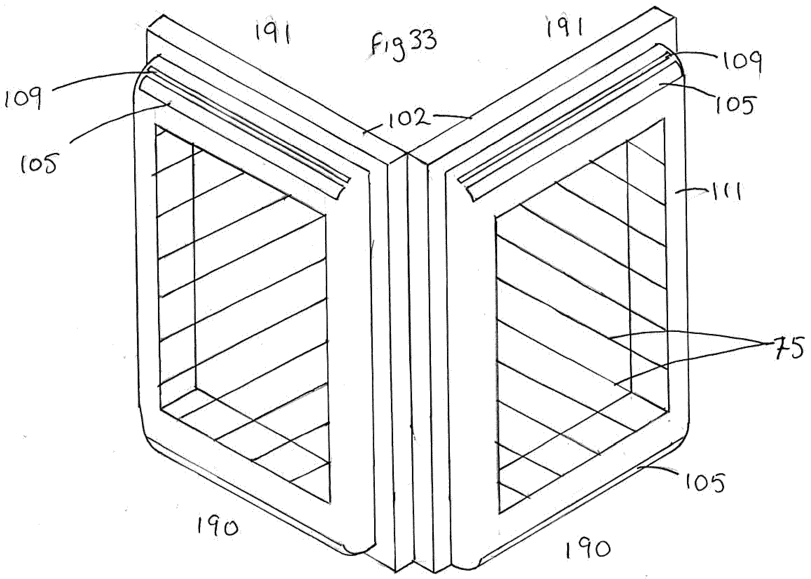

Figure 33 shows two frames 100 according to the invention side-by-side at an angle and surrounded by structure surround 102 with a hinge pin (not shown) at each of ends 190 and 191. A load bearing mesh or grill 75 is provided within inner opening 104 to provide support for a deployed membrane. In this embodiment, the deployed membrane preferably acts as a water weir.

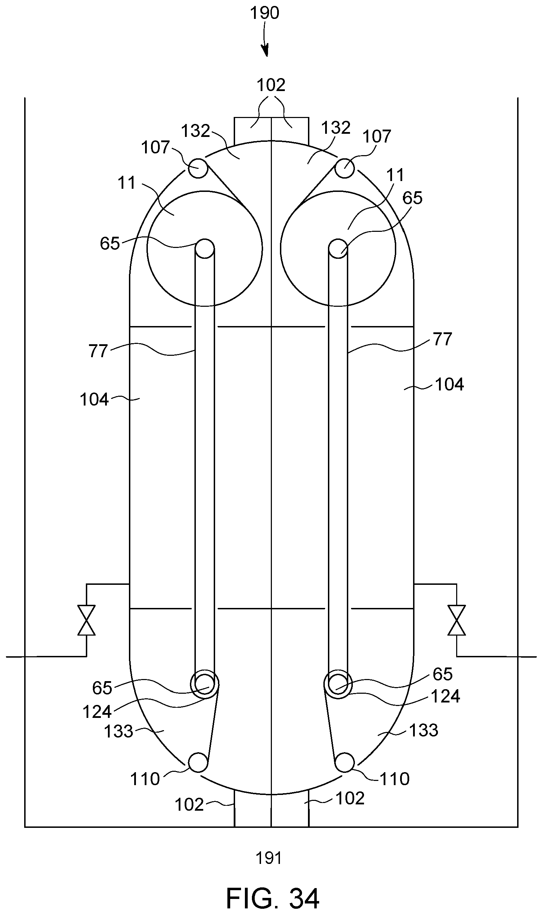

Figure 34 shows an alternative internal side view of the back-to-back frames 100 of Figure 16 in a tank. Outer frame structure 102 acts as standing supports for frame 100. Membrane 11 is deployed and retrieved via membrane guides 107 and 110, respectively, over inner opening 104. Mechanical linkage 77 on pully wheels 65 between deployment chamber 132 and retrieval chamber 133 assists with the deployment of membrane 11.

It is to be understood that the invention is not limited to the specific details described herein which are given by way of example only and that various modifications and alterations are possible without departing from the scope of the invention as defined in the appended claims.

## Claims

1. A combination of a membrane (11) and a frame (100, 200, 300, 400, 500) for the membrane, wherein the membrane is housed within the frame, the frame comprising:
a rear outer section (102) for structural integrity of the frame, wherein the rear outer section surrounds an inner frame opening (104);
a front inner section (103) secured to a front of the rear outer section to form a first chamber (132) for housing the
membrane, and a section for retrieving the membrane, wherein the front inner section has a curved or angular front surface in the form of an integrally formed or separately attached skin (111) and wherein the first chamber and the section for retrieving the membrane are at the opposite ends (190, 191) of the frame;
a first membrane guide (107) located within the first chamber for use in deployment of the membrane;
wherein a first aperture (106) from which the membrane may be deployed from the first membrane guide and a second aperture (109) through which the membrane may be received are located at opposing ends of the front inner section such that, when deployed, the membrane covers the inner frame opening ;
wherein access panels (105) are provided in the front inner section for access into the first chamber,
**characterized in that**, when deployed, the membrane covers the majority of the front surface to create a seal upon the front surface of the frame; and
wherein the curvature or angulation of the skin of the front inner section of the frame and the resulting tightness of the membrane upon it, seals the membrane to the frame;
and wherein the membrane is of any suitable shape for deployment through the apertures and to cover the front of the frame.

2. The combination of claim 1, wherein the frame (100, 200, 300, 400, 500) further comprises:
a second chamber (133) for retrieving the membrane (11) and a third chamber (134) between the first and second chambers and surrounding the inner frame opening (104), wherein the first and second chambers are at the opposite ends (190, 191) of the frame; and
a second membrane guide (110) within the second chamber for use in retrieval of the membrane;
wherein the second aperture (109) through which the membrane may be received is for retrieval of the membrane onto the second membrane guide; and
wherein access panels (105) are provided in the front inner section (103) for access into one or more of the second (133) and third (134) chambers.

3. The combination of claim 2, wherein one or more walls of the third chamber (134) comprise one or more of a ledge protruding into the inner opening (104) of the frame (100, 200, 300, 400, 500), a picture frame feature upon which a door can rest, a cooling coil for use in the de-humidification of air, UV lamps for the disinfectant of water and air, electromagnetic coils and electrodes to energise and manipulate ions in water for the propulsion of water and or the conditioning of water, damper blades for the control of air velocities, and a grid or mesh for support of the membrane (11) and which covers the area being protected or for filtration.

4. The combination of claim 2 or claim 3, wherein the access panels (105) for the first (132) and second (133) chambers are located in the skin (111) and the access panel (105) for the third chamber (134) is provided adjacent the inner frame opening (104).

5. The combination of any one of the claims 2 to 4, wherein the second membrane guide comprises a membrane retrieval rotating rod (124) and a membrane retrieval guide roller (110) located within the second chamber (133) for use in retrieval of the membrane.

6. The combination of any one of claims 2 to 5, wherein an actuator (108) is placed on the outside of the rear outer section (102) adjacent the second chamber (133) or within the second chamber.

7. The combination of any one of claims 2 to 6, wherein the frame (100, 200, 300, 400, 500) further comprises mechanical piping installed within the third chamber (134) and spray points on the front surface of the front inner section for use with one or more of a fire suppression or sprinkler system, a filtration area backwash or blow off system, a chemical dosing for conditioning of water or effluent, or the aeration of effluents or decontamination or humidification of air.

8. The combination of any one of claims 2 to 7, wherein the first chamber (132) comprises a first membrane guide roller (107) or a first membrane guide bar (113), or both, and a roll or cartridge of membrane (11) which is held in position with the use of the first membrane securing bar or rod, wherein the first membrane is pre-deployed via the first membrane guide roller and/or the first membrane guide bar and passed through the first membrane deployment aperture (106) on the skin (11) of the frame (100, 200, 300, 400, 500) above the first chamber (132) and across the surface of the frame, where it is passed through the first membrane retrieval aperture (109) on the skin of the frame above the second chamber (133) at the opposite side, and wherein the second chamber comprises a first membrane retrieval guide roller (110) and/or a first membrane retrieval guide bar (124) and a first membrane retrieval rotating bar or rod, wherein the first membrane is attached to the first membrane retrieval rotating bar or rod via the first membrane retrieval guide roller and/or the first membrane retrieval guide bar and is actuated in a clockwise or anti-clockwise direction, from a point of actuation external to the second chamber or, with the use of pulley or chain linked system from an internal point of actuation in the second chamber to further retrieve the membrane across the surface of the frame.

9. The combination of any one of the preceding claims, wherein the frame (100, 200, 300, 400, 500) is suitable for two membranes (11, 12).

10. The combination of claim 9, wherein the front inner section (103) and rear outer section (103) together form five chambers, the five chambers comprising two adjacent chambers for housing a membrane (11) and two opposing chambers for retrieving the membrane and opposing the housing chambers, with a fifth chamber located between opposing housing chambers and retrieval chambers.

11. The combination of claim 9 when dependent on claim 2, wherein the first chamber (132) comprises two membrane deployment guides (107, 207), one above the other, and the second chamber (133) comprises two membrane retrieval guides (110, 210), one above the other.

12. The combination of any one of the preceding claims, wherein the rear outer section (103) comprises a square or rectangular flat back plate and a box section or side perimeter walls.

13. The combination of any one of the preceding claims, wherein the back of the skin (11) is provided with rubber gaskets.

14. The combination of any one of the preceding claims, wherein the first membrane guide (107) comprises a membrane deployment bar and a membrane deployment guide roller located within the first chamber (132) for use in deployment of the membrane.

15. The combination of any one of the preceding claims, wherein the frame (100, 200, 300, 400, 500) further comprises an internal frame ventilation system, such as a fan (157).

## Patentansprüche

1. Zusammensetzung aus einer Membran (11) und einem Rahmen (100, 200, 300, 400, 500) für die Membran, wobei die Membran innerhalb des Rahmens untergebracht ist, wobei der Rahmen Folgendes umfasst:
einen hinteren äußeren Abschnitt (102) zur strukturellen Integrität des Rahmens, wobei der hintere äußere Abschnitt eine innere Rahmenöffnung (104) umgibt;
einen vorderen inneren Abschnitt (103), der an einer Vorderseite des hinteren äußeren Abschnitts befestigt ist, um eine erste Kammer (132) zum Unterbringen der Membran und einen Abschnitt zum Erfassen der Membran auszubilden, wobei der vordere innere Abschnitt eine gekrümmte oder winkelige vordere Oberfläche in der Form einer einstückig ausgebildeten oder separat angebrachten Hülle (111) aufweist und wobei die erste Kammer und der Abschnitt zum Erfassen der Membran an den gegenüberliegenden Enden (190, 191) des Rahmens liegen; eine erste Membranführung (107), die sich innerhalb der ersten Kammer befindet, zur Verwendung bei der Entfaltung der Membran;
wobei ein erster Durchlass (106), aus dem die Membran von der ersten Membranführung entfaltet werden kann, und ein zweiter Durchlass (109), durch den die Membran aufgenommen werden kann, sich an gegenüberliegenden Enden des vorderen inneren Abschnitts befinden, sodass die Membran, wenn sie entfaltet ist, die innere Rahmenöffnung bedeckt;
wobei Zugangsdeckel (105) in dem vorderen inneren Abschnitt zum Zugang in die erste Kammer bereitgestellt sind,
**dadurch gekennzeichnet, dass** die Membran, wenn sie entfaltet ist, den Großteil der vorderen Oberfläche bedeckt, um eine Abdichtung an der vorderen Oberfläche des Rahmens zu schaffen; und
wobei die Krümmung oder Winkelung der Hülle des vorderen inneren Abschnitts des Rahmens und die daraus resultierende Straffheit der Membran daran die Membran an dem Rahmen abdichtet;
und wobei die Membran von einer beliebigen geeigneten Gestalt zum Entfalten durch die Durchlässe und zum Abdecken der Vorderseite des Rahmens ist.

2. Zusammensetzung nach Anspruch 1, wobei der Rahmen (100, 200, 300, 400, 500) ferner Folgendes umfasst:
eine zweite Kammer (133) zum Erfassen der Membran (11) und eine dritte Kammer (134) zwischen der ersten und der zweiten Kammer, die die innere Rahmenöffnung (104) umgibt, wobei die erste und die zweite Kammer an den gegenüberliegenden Enden (190, 191) des Rahmens liegen; und
eine zweite Membranführung (110) innerhalb der zweiten Kammer zur Verwendung beim Erfassen der Membran;
wobei der zweite Durchlass (109), durch den die Membran aufgenommen werden kann, zum Erfassen der Membran an der zweiten Membranführung dient; und
wobei Zugangsdeckel (105) in dem vorderen inneren Abschnitt (103) zum Zugang in eine oder mehrere von der zweiten (133) und der dritten (134) Kammer bereitgestellt sind.

3. Zusammensetzung nach Anspruch 2, wobei eine oder mehrere Wände der dritten Kammer (134) eines oder mehrere von einer Leiste, die in die innere Öffnung (104) des Rahmens (100, 200, 300, 400, 500) ragt, einem Bilderrahmenelement, auf dem eine Tür aufliegen kann, einer Kühlschlange zur Verwendung bei der Entfeuchtung von Luft, UV-Lampen für das Desinfektionsmittel von Wasser und Luft, elektromagnetischen Spulen und Elektroden zum Erregen und Manipulieren von Ionen in Wasser für den Antrieb von Wasser und oder die Konditionierung von Wasser, Dämpferblättern zur Steuerung von Luftgeschwindigkeiten und einem Gitter oder Netz zur Unterstützung der Membran (11), das den zu schützenden Bereich oder den Bereich zur Filtration abdeckt, umfassen.

4. Zusammensetzung nach Anspruch 2 oder Anspruch 3, wobei sich die Zugangsdeckel (105) für die erste (132) und die zweite (133) Kammer in der Hülle (111) befinden und der Zugangsdeckel (105) für die dritte Kammer (134) angrenzend an die innere Rahmenöffnung (104) bereitgestellt ist.

5. Zusammensetzung nach einem der Ansprüche 2 bis 4, wobei die zweite Membranführung eine Membranerfassungsdrehstange (124) und eine Membranerfassungsführungswalze (110) umfasst, die sich innerhalb der zweiten Kammer (133) zur Verwendung beim Erfassen der Membran befinden.

6. Zusammensetzung nach einem der Ansprüche 2 bis 5, wobei ein Aktuator (108) an der Außenseite des hinteren äußeren Abschnitts (102) benachbart zu der zweiten Kammer (133) oder innerhalb der zweiten Kammer platziert ist.

7. Zusammensetzung nach einem der Ansprüche 2 bis 6, wobei der Rahmen (100, 200, 300, 400, 500) ferner mechanische Leitungen, die innerhalb der dritten Kammer (134) installiert sind, und Sprühpunkte auf der vorderen Oberfläche des vorderen inneren Abschnitts zur Verwendung mit einem oder mehreren von einem Feuerbekämpfungs- oder Sprinklersystem, einem Rückspül- oder Abblasesystem für den Filtrationsbereich, einer Chemikalienzuteilung zur Konditionierung von Wasser oder Ablauf oder der Belüftung von Abläufen oder der Dekontamination oder Befeuchtung von Luft umfasst.

8. Zusammensetzung nach einem der Ansprüche 2 bis 7, wobei die erste Kammer (132) eine erste Membranführungswalze (107) oder einen ersten Membranführungsstab (113) oder beides und eine Rolle oder Kassette der Membran (11) umfasst, die unter Verwendung des ersten Membranbefestigungsstabs oder der Membranbefestigungsstange in Position gehalten wird, wobei die erste Membran mittels der ersten Membranführungswalze und/oder des ersten Membranführungsstabs vorentfaltet und durch den ersten Membranentfaltungsdurchlass (106) an der Hülle (11) des Rahmens (100, 200, 300, 400, 500) oberhalb der ersten Kammer (132) und über die Oberfläche des Rahmens geleitet wird, wo sie durch den ersten Membranerfassungsdurchlass (109) an der Hülle des Rahmens oberhalb der zweiten Kammer (133) auf der gegenüberliegenden Seite geleitet wird, und wobei die zweite Kammer eine erste Membranerfassungsführungswalze (110) und/oder einen ersten Membranerfassungsführungsstab (124) und eine erste Membranerfassungsdrehstange oder einen ersten Membranerfassungsdrehstab umfasst, wobei die erste Membran mittels der ersten Membranerfassungsführungswalze und/oder des ersten Membranerfassungsführungsstabs an der ersten Membranerfassungsdrehstange oder dem ersten Membranerfassungsdrehstab befestigt ist und in einer Richtung im Uhrzeigersinn oder gegen den Uhrzeigersinn von einem Betätigungspunkt außerhalb der zweiten Kammer oder unter Verwendung eines Riemenscheiben- oder Kettenverbindungssystems von einem inneren Betätigungspunkt in der zweiten Kammer zum weiteren Erfassen der Membran über die Oberfläche des Rahmens betätigt wird.

9. Zusammensetzung nach einem der vorhergehenden Ansprüche, wobei der Rahmen (100, 200, 300, 400, 500) für zwei Membranen (11, 12) geeignet ist.

10. Zusammensetzung nach Anspruch 9, wobei der vordere innere Abschnitt (103) und der hintere äußere Abschnitt (103) zusammen fünf Kammern ausbilden, wobei die fünf Kammern zwei angrenzende Kammern zum Unterbringen einer Membran (11) und zwei gegenüberliegende Kammern zum Erfassen der Membran, die den Unterbringungskammern gegenüberliegen, umfassen, wobei sich eine fünfte Kammer zwischen gegenüberliegenden Unterbringungskammern und Erfassungskammern befindet.

11. Zusammensetzung nach Anspruch 9, wenn abhängig von Anspruch 2, wobei die erste Kammer (132) zwei Membranentfaltungsführungen (107, 207), eine über der anderen, umfasst und die zweite Kammer (133) zwei Membranerfassungsführungen (110, 210), eine über der anderen, umfasst.

12. Zusammensetzung nach einem der vorhergehenden Ansprüche, wobei der hintere äußere Abschnitt (103) eine quadratische oder rechteckige flache Rückplatte und einen Kastenabschnitt oder Seitenumfangswände umfasst.

13. Zusammensetzung nach einem der vorhergehenden Ansprüche, wobei die Rückseite der Hülle (11) mit Gummidichtungen versehen ist.

14. Zusammensetzung nach einem der vorhergehenden Ansprüche, wobei die erste Membranführung (107) einen Membranentfaltungsstab und eine Membranentfaltungsführungswalze umfasst, die sich innerhalb der ersten Kammer (132) zur Verwendung bei der Entfaltung der Membran befinden.

15. Zusammensetzung nach einem der vorhergehenden Ansprüche, wobei der Rahmen (100, 200, 300, 400, 500) ferner ein internes Rahmenbelüftungssystem, wie etwa einen Lüfter (157), umfasst.

## Revendications

1. Combinaison d'une membrane (11) et d'un cadre (100, 200, 300, 400, 500) pour la membrane, ladite membrane étant logée à l'intérieur du cadre, le cadre comprenant :
une section externe arrière (102) pour l'intégrité structurelle du cadre, ladite section externe arrière entourant une ouverture de cadre interne (104) ;
une section interne avant (103) fixée à l'avant de la section externe arrière pour former une première chambre (132) destinée à loger la membrane, et une section destinée à récupérer la membrane,
ladite section interne avant comportant une surface avant incurvée ou angulaire sous la forme d'une peau intégralement formée ou fixée séparément (111) et ladite première chambre et ladite section destinée à récupérer la membrane étant au niveau des extrémités opposées (190, 191) du cadre ;
un premier guide (107) de membrane situé à l'intérieur de la première chambre destiné à être utilisé dans le déploiement de la membrane ;
un première orifice (106) à partir duquel la membrane peut être déployée à partir du premier guide de membrane et un second orifice (109) à travers lequel la membrane peut être reçue étant situées au niveau d'extrémités opposées de la section interne avant de sorte que, lorsqu'elle est déployée, la membrane recouvre l'ouverture de cadre interne ;
des panneaux d'accès (105) étant prévus dans la section interne avant permettant l'accès à la première chambre,
**caractérisée en ce que**, lorsqu'elle est déployée, la membrane recouvre la majorité de la surface avant pour créer un joint d'étanchéité sur la surface avant du cadre ; et
ladite courbure ou ladite angulation de la peau de la section interne avant du cadre et l'étanchéité résultante de la membrane sur celle-ci, scellant la membrane au cadre ;
et ladite membrane étant de toute forme appropriée pour un déploiement à travers les ouvertures et pour couvrir l'avant du cadre.

2. Combinaison de la revendication 1, ledit cadre (100, 200, 300, 400, 500) comprenant en outre :
une deuxième chambre (133) destinée à récupérer la membrane (11) et une troisième chambre (134) entre les première et seconde chambres et entourant l'ouverture de cadre interne (104),
lesdites première et deuxième chambres étant au niveau des extrémités opposées (190, 191) du cadre ; et
un second guide (110) de membrane à l'intérieur de la deuxième chambre destiné à être utilisé dans la récupération de la membrane ;
ledit second orifice (109) à travers lequel la membrane peut être reçue étant destiné à la récupération de la membrane sur le second guide de membrane ; et
des panneaux d'accès (105) étant prévus dans la section interne avant (103) permettant l'accès à une ou plusieurs des deuxième (133) et troisième (134) chambres.

3. Combinaison de la revendication 2, une ou plusieurs parois de la troisième chambre (134) comprenant un ou plusieurs parmi un rebord faisant saillie dans l'ouverture interne (104) du cadre (100, 200, 300, 400, 500), une caractéristique de cadre d'image sur laquelle une porte peut reposer, une bobine de refroidissement destinée à être utilisée dans la déshumidification de l'air, des lampes UV pour la désinfection de l'eau et de l'air, des bobines électromagnétiques et des électrodes pour exciter et manipuler des ions dans l'eau pour la propulsion de l'eau et/ou le conditionnement de l'eau, des lames d'amortisseur pour la régulation des vitesses d'air, et une grille ou un maillage pour le support de la membrane (11) et qui couvre la zone à protéger ou pour la filtration.

4. Combinaison de la revendication 2 ou de la revendication 3, lesdits panneaux d'accès (105) pour les première (132) et deuxième (133) chambres étant situés dans la peau (111) et ledit panneau d'accès (105) pour la troisième chambre (134) étant prévu adjacent à l'ouverture de cadre interne (104).

5. Combinaison de l'une quelconque des revendications 2 à 4, ledit second guide de membrane comprenant une tige rotative de récupération (124) de membrane et un rouleau de guidage de récupération (110) de membrane situés à l'intérieur de la deuxième chambre (133) destinée à être utilisée dans la récupération de la membrane.

6. Combinaison de l'une quelconque des revendications 2 à 5, un actionneur (108) étant placé sur l'extérieur de la section externe arrière (102) adjacente à la deuxième chambre (133) ou à l'intérieur de la deuxième chambre.

7. Combinaison de l'une quelconque des revendications 2 à 6, ledit cadre (100, 200, 300, 400, 500) comprenant en outre une tuyauterie mécanique installée à l'intérieur de la troisième chambre (134) et des points de pulvérisation sur la surface avant de la section interne avant destinés à être utilisés avec l'un ou plusieurs parmi un système d'extinction d'incendie ou d'arrosage, un système de lavage à contre-courant ou de soufflage de zone de filtration, un dosage chimique pour le conditionnement de l'eau ou des effluents, ou l'aération d'effluents ou la décontamination ou l'humidification de l'air.

8. Combinaison de l'une quelconque des revendications 2 à 7, ladite première chambre (132) comprenant un premier rouleau de guidage (107) de membrane ou une première barre de guidage (113) de membrane, ou les deux, et un rouleau ou une cartouche de membrane (11) qui est maintenu en position à l'aide de la première barre ou tige de fixation de membrane, ladite première membrane étant prédéployée par l'intermédiaire du premier rouleau de guidage de membrane et/ou de la première barre de guidage de membrane et passée à travers le premier orifice de déploiement (106) de membrane sur la peau (11) du cadre (100, 200, 300, 400, 500) au-dessus de la première chambre (132) et à travers la surface du cadre, où il est passé à travers le premier orifice de récupération (109) de membrane sur la peau du cadre au-dessus de la deuxième chambre (133) sur le côté opposé, et ladite deuxième chambre comprenant un premier rouleau de guidage de récupération (110) de membrane et/ou une première barre de guidage de récupération (124) de membrane et une première barre ou tige rotative de récupération de membrane, ladite première membrane étant fixée à la première barre ou tige rotative de récupération de membrane par l'intermédiaire du premier rouleau de guidage de récupération de membrane et/ou de la première barre de guidage de récupération de membrane et étant actionnée dans le sens horaire ou dans le sens antihoraire, à partir d'un point d'actionnement extérieur jusqu'à la deuxième chambre ou, avec l'utilisation d'un système à poulie ou à chaîne à partir d'un point d'actionnement intérieur dans la deuxième chambre pour récupérer davantage la membrane à travers la surface du cadre.

9. Combinaison de l'une quelconque des revendications précédentes, ledit cadre (100, 200, 300, 400, 500) étant approprié pour deux membranes (11, 12).

10. Combinaison de la revendication 9, ladite section interne avant (103) et ladite section externe arrière (103) formant ensemble cinq chambres, les cinq chambres comprenant deux chambres adjacentes destinées à loger une membrane (11) et deux chambres opposées destinées à récupérer la membrane et opposées aux chambres de logement, une cinquième chambre étant située entre des chambres de logement opposées et des chambres de récupération.

11. Combinaison de la revendication 9 lorsqu'elle dépend de la revendication 2, ladite première chambre (132) comprenant deux guides de déploiement (107, 207) de membrane, l'un au-dessus de l'autre, et ladite deuxième chambre (133) comprenant deux guides de récupération (110, 210) de membrane, l'un au-dessus de l'autre.

12. Combinaison de l'une quelconque des revendications précédentes, ladite section externe arrière (103) comprenant une plaque arrière plate carrée ou rectangulaire et une section en caisson ou des parois périphériques latérales.

13. Combinaison de l'une quelconque des revendications précédentes, ledit dos de la peau (11) étant muni de joints en caoutchouc.

14. Combinaison de l'une quelconque des revendications précédentes, ledit premier guide (107) de membrane comprenant une barre de déploiement de membrane et un rouleau de guidage de déploiement de membrane situés à l'intérieur de la première chambre (132) destinés à être utilisés dans le déploiement de la membrane.

15. Combinaison de l'une quelconque des revendications précédentes, ledit cadre (100, 200, 300, 400, 500) comprenant en outre un système de ventilation de cadre interne, tel qu'un ventilateur (157).
